# EUROPEAN PATENT SPECIFICATION

(11) **EP 4 644 136 B1**
(45) Date of publication and mention of the grant of the patent: **04.11.2026**
(21) Application number: 25163806.0
(22) Date of filing: 14.03.2025
(51) Int. Cl.: B60C 11/03, B60C 11/12, B60C 11/13, B29D 30/06

(54) **HEAVY DUTY TIRE**
SCHWERLASTREIFEN
PNEU POUR POIDS LOURDS

(30) Priority: 01.05.2024 JP 2024074468
(43) Date of publication of application: 05.11.2025
(73) Proprietor: Sumitomo Rubber Industries, Ltd., Kobe-shi, Hyogo 651-0072 (JP)
(72) Inventor: ITO, Shuhei, Kobe-shi, 651-0072 (JP)
(74) Representative: Manitz Finsterwald Patent- und Rechtsanwaltspartnerschaft mbB

(56) References cited:
- EP-A1- 2 072 286
- EP-A1- 4 574 452
- EP-A2- 4 015 203
- WO-A1-2010/030276
- WO-A1-2019/092364
- FR-A1- 3 058 927
- FR-A1- 3 114 271
- US-A1- 2021 107 245

## Description

### BACKGROUND OF THE INVENTION

### Field of the Invention

The present invention relates to a heavy duty tire.

### Background Art

A tire comes into contact with a road surface at the tread thereof. A tread pattern formed by forming grooves on the tread influences the performance of the tire.

The tread pattern has a plurality of circumferential grooves. The plurality of circumferential grooves demarcate a plurality of land portions in the tread.

The tread becomes deformed when coming into contact with a road surface. The deformation of the tread influences the rolling resistance of the tire. In consideration of influence on the environment, reduction of rolling resistance is strongly required for tires.

By providing the circumferential grooves with narrow groove portions having a narrow groove width, the land portions can support each other when the tread comes into contact with a road surface. Accordingly, deformation of the tread is suppressed.

In order to reduce the rolling resistance of a tire, the adoption of circumferential grooves having narrow groove portions, that is, circumferential narrow grooves, has been considered (for example, Japanese Laid-Open Patent Publication No. 2017-094891).

A tire is obtained by vulcanizing a green tire in a mold. A tread ring of the mold forms the outer surface of a tread. In the case of forming circumferential narrow grooves on the tread, the tread ring is provided with projections that reflect the shapes of the circumferential narrow grooves. The projections protrude radially inward.

In the case where the mold is a segmented mold, the tread ring is composed of a plurality of segments aligned in the circumferential direction.

After the vulcanization step is completed, the tire is released from the mold. At this time, each segment is moved radially outward. Accordingly, the projections are pulled out from the tread.

The circumferential narrow grooves also influence, for example, running performance on a wet road surface (hereinafter also referred to as wet performance). Improvements to circumferential narrow grooves are being made while the influence on various performances is taken into consideration.

An object of the present invention is to provide a heavy duty tire that can suppress occurrence of tread chipping when released from a mold and a decrease in wet performance due to wear and can reduce rolling resistance. The related technologies are known from FR 3 114 271 A1, FR 3 058 927 A1, WO 2010/030276 A1, WO 2019/092364 A1, EP 2 072 286 A1, and EP 4 574 452 A1 under Article 54(3) EPC.

### SUMMARY OF THE INVENTION

The present invention is set out in the appended claims. A heavy duty tire according to the present invention includes a tread configured to come into contact with a road surface at a tread surface thereof. The tread has a tread pattern including a plurality of circumferential grooves and a plurality of lateral sipes. The plurality of circumferential grooves demarcate a plurality of land portions in the tread. The plurality of land portions include a pair of outer land portions each located on an outermost side in an axial direction and including an end of the tread surface, and a plurality of inner land portions located between the pair of outer land portions and aligned in the axial direction. The plurality of circumferential grooves include a circumferential main groove located between each of the outer land portions and the inner land portion located axially inward of the outer land portion, and a circumferential narrow groove located between two adjacent said inner land portions. The circumferential narrow groove includes a body portion including a groove opening of the circumferential narrow groove, a wide portion including a groove bottom of the circumferential narrow groove, and a first inflection portion connecting the body portion and the wide portion. The body portion includes a narrow groove portion. A maximum width WC2 of the wide portion is wider than a minimum width WC1 of the narrow groove portion. A pair of wall surfaces of the circumferential narrow groove come into contact with each other at the narrow groove portion when the tread comes into contact with a road surface and becomes deformed. A contour of the first inflection portion in a cross-section of the circumferential narrow groove is represented by an arc having a radius RC1. At least one of the inner land portions has the lateral sipes. The lateral sipes are connected to the circumferential narrow groove. Each of the lateral sipes includes a sipe body including a groove opening of the lateral sipe, a tubular portion including a groove bottom of the lateral sipe, and a second inflection portion connecting the sipe body and the tubular portion. A maximum width WL2 of the tubular portion is wider than a minimum width WL1 of the sipe body. A contour of the second inflection portion in a cross-section of the lateral sipe is represented by an arc having a radius RL1. The radius RC1 of the arc representing the contour of the first inflection portion is larger than half the maximum width WC2 of the wide portion.

The present invention can provide a heavy duty tire that can suppress occurrence of tread chipping when released from a mold and a decrease in wet performance due to wear and can reduce rolling resistance.

### BRIEF DESCRIPTION OF THE DRAWINGS

FIG. 1 is a development view showing a part of a tread of a heavy duty tire according to one embodiment of the present invention;
FIG. 2 is a development view showing a part of FIG. 1;
FIG. 3 is a cross-sectional view of FIG. 1 taken along a line III-III;
FIG. 4 is a cross-sectional view of FIG. 2 taken along a line IV-IV;
FIG. 5 is a cross-sectional view showing a modification of a circumferential narrow groove;
FIG. 6 is a cross-sectional view of FIG. 2 taken along a line VI-VI;
FIG. 7 is a cross-sectional view showing a part of a vulcanizing machine used in a production method for a heavy duty tire;
FIG. 8 is a plan view illustrating the opening and closing of a mold;
FIG. 9 is a development view showing a part of a pattern forming portion;
FIG. 10 is a cross-sectional view of FIG. 9 taken along a line X-X;
FIG. 11 is a cross-sectional view of FIG. 9 taken along a line XI-XI;
FIG. 12 is a cross-sectional view showing a part of a cross-section taken along a line XII-XII in FIG. 2;
FIG. 13 is a cross-sectional view showing the relationship between the projection direction of each lateral blade and the movement direction of each segment;
FIG. 14 is a plan view showing the relationship between each pitch pattern and each division surface;
FIG. 15 is a development view showing a modification of the division surface;
FIG. 16 is a cross-sectional view showing a modification of the lateral blade; and
FIG. 17 is a cross-sectional view showing a modification of a lateral sipe.

### DETAILED DESCRIPTION

Hereinafter, the present invention will be described in detail based on a preferred embodiment with appropriate reference to the drawings.

A tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

### [Findings on Which Present Invention Is Based]

As described above, by providing the circumferential narrow grooves on the tread, deformation of the tread is suppressed when the tread comes into contact with a road surface. By forming one or some of the circumferential grooves provided on the tread as circumferential narrow grooves, the rolling resistance of the tire can be reduced.

The circumferential narrow grooves are inferior to the circumferential main grooves in terms of drainage performance. In the case where one or some of the circumferential grooves provided on the tread are formed as circumferential narrow grooves, there is a concern that wet performance may be decreased due to wear of the tread.

For example, sipes that extend so as to traverse a land portion (hereinafter referred to as lateral sipes) can function as edge components. By providing lateral sipes on a land portion, the tire can suppress a decrease in wet performance.

The tread becomes worn. Accordingly, the volume of each groove formed on the tread is decreased. If the groove volume is decreased, drainage performance is decreased. By providing circumferential narrow grooves and lateral sipes on the tread, the tire can reduce rolling resistance while suppressing a decrease in wet performance in the initial stage of wear. However, in the middle and subsequent stages of wear, the groove volume is decreased, so that there is a concern that wet performance may be decreased.

Therefore, in order to suppress a decrease in wet performance in the middle and subsequent stages of wear, it has been considered to provide a wide portion on the groove bottom side of each circumferential narrow groove and provide a tubular portion on the groove bottom side of each lateral sipe.

In the case of forming circumferential narrow grooves and lateral sipes on the tread, a tread ring of a mold is provided with projections that reflect the shapes of the circumferential narrow grooves and blades that reflect the shape of the lateral sipes.

In order to suppress a decrease in wet performance, in the case of providing a wide portion in each circumferential narrow groove, the shape of the wide portion is reflected in a distal end portion of the projection.

When the vulcanization step is completed and the tire is released from the mold, the distal end portion of the projection passes through a narrow groove portion having a narrower groove width than the wide portion. Pulling out the projection is accompanied by deformation of the land portion.

For example, in the case of providing, on a land portion between two circumferential narrow grooves, lateral sipes traversing this land portion, blades for the lateral sipes are connected to the projections for the circumferential narrow grooves. This mold has a connection portion between each projection and each blade (hereinafter referred to as projection-blade connection portion).

A bulge portion is formed at the distal end portion of the projection, so that rubber is likely to get caught at the projection-blade connection portion when releasing the tire from the mold.

In the case where the mold is a segmented mold, the projection and each blade are pulled out more obliquely with respect to the projection direction thereof at a position closer to an end portion in the circumferential direction of a segment. In the case where a projection-blade connection portion is located at an end portion of the segment in the circumferential direction, stress acting on the land portion may be concentrated on a portion in contact with the connection portion, and there is a concern that, depending on the degree of the stress concentration, chipping may occur in the land portion (i.e., the tread).

If a tubular portion is provided on the groove bottom side of each lateral sipe in order to suppress a decrease in wet performance in the middle and subsequent stages of wear, the risk of occurrence of tread chipping is expected to increase further.

Therefore, in order to obtain a tire that can suppress occurrence of tread chipping when released from a mold and a decrease in wet performance due to wear and can reduce rolling resistance, the present inventor has conducted a thorough study for the shapes of the circumferential narrow grooves and the lateral sipes, and thus has completed the present invention described below.

### [Outline of Embodiment of Present Invention]

The present invention is directed to a heavy duty tire including a tread configured to come into contact with a road surface at a tread surface thereof, wherein the tread has a tread pattern including a plurality of circumferential grooves and a plurality of lateral sipes, the plurality of circumferential grooves demarcate a plurality of land portions in the tread, the plurality of land portions include a pair of outer land portions each located on an outermost side in an axial direction and including an end of the tread surface, and a plurality of inner land portions located between the pair of outer land portions and aligned in the axial direction, the plurality of circumferential grooves include a circumferential main groove located between each of the outer land portions and the inner land portion located axially inward of the outer land portion, and a circumferential narrow groove located between two adjacent said inner land portions, the circumferential narrow groove includes a body portion including a groove opening of the circumferential narrow groove, a wide portion including a groove bottom of the circumferential narrow groove, and a first inflection portion connecting the body portion and the wide portion, the body portion includes a narrow groove portion, a maximum width WC2 of the wide portion is wider than a minimum width WC1 of the narrow groove portion, a pair of wall surfaces of the circumferential narrow groove come into contact with each other at the narrow groove portion when the tread comes into contact with a road surface and becomes deformed, a contour of the first inflection portion in a cross-section of the circumferential narrow groove is represented by an arc having a radius RC 1, at least one of the inner land portions has the lateral sipes, the lateral sipes are connected to the circumferential narrow groove, each of the lateral sipes includes a sipe body including a groove opening of the lateral sipe, a tubular portion including a groove bottom of the lateral sipe, and a second inflection portion connecting the sipe body and the tubular portion, a maximum width WL2 of the tubular portion is wider than a minimum width WL1 of the sipe body, a contour of the second inflection portion in a cross-section of the lateral sipe is represented by an arc having a radius RL1, and the radius RC1 of the arc representing the contour of the first inflection portion is larger than half the maximum width WC2 of the wide portion.

The heavy duty tire of the present invention can suppress occurrence of tread chipping when released from a mold and a decrease in wet performance due to wear and can reduce rolling resistance. The mechanism by which this effect is achieved has not been clarified, but is inferred as follows.

In the tire of the present invention, when the tread comes into contact with a road surface and becomes deformed, the pair of wall surfaces of each circumferential narrow groove come into contact with each other at the narrow groove portion. The two inner land portions positioned with the circumferential narrow groove located therebetween support each other, and deformation of the inner land portions is suppressed. The tire can reduce rolling resistance.

The sipe body of each lateral sipe can function as an edge component. The tire can maintain good wet performance even when the tread becomes worn.

The maximum width WC2 of the wide portion is wider than the minimum width WC1 of the narrow groove portion, and the maximum width WL2 of the tubular portion is wider than the minimum width WL1 of the sipe body. The wide portion of each circumferential narrow groove and the tubular portion of each lateral sipe can contribute to ensuring the groove volume. Even when the tread becomes worn and the sipe body disappears, the exposed tubular portion and wide portion can contribute to maintaining wet performance.

The tire can maintain good wet performance from the new state until replacement of the tire becomes necessary.

The tire can suppress a decrease in wet performance due to wear and can reduce rolling resistance.

As described later, the mold for the tire includes a narrow groove projection for forming the circumferential narrow groove, and lateral blades for forming the lateral sipes. After the vulcanization step is completed, the tire is released from the mold. At this time, the narrow groove projections and the lateral blades are pulled out of the tread.

In the tire, the contour of the first inflection portion of the circumferential narrow groove and the contour of the second inflection portion of each lateral sipe are each represented by a single arc. The first inflection portion and the second inflection portion are each formed in a smooth shape. Even though the circumferential narrow groove has the wide portion and the lateral sipe has the tubular portion, the resistance force when pulling the narrow groove projection and each lateral blade from the tread is reduced. In particular, since the radius RC1 of the arc representing the contour of the first inflection portion is larger than half the maximum width WC2 of the wide portion, the resistance force when pulling the narrow groove projection from the tread is effectively reduced, and rubber is inhibited from getting caught at a projection-blade connection portion. The tire can suppress occurrence of tread chipping when released from the mold.

The tire can suppress occurrence of tread chipping when released from the mold and a decrease in wet performance due to wear and can reduce rolling resistance.

The radius RL1 of the arc representing the contour of the second inflection portion is larger than half the maximum width WL2 of the tubular portion. In this case, the resistance force when pulling the blade from the tread is effectively reduced. The tire can suppress occurrence of tread chipping when released from the mold.

Preferably, a ratio WC1/WC2 of the minimum width WC1 of the narrow groove portion to the maximum width WC2 of the wide portion is not less than 0.10 and not greater than 0.35. In this case, the tire can suppress occurrence of tread chipping when released from the mold and a decrease in wet performance due to wear.

Preferably, the minimum width WC1 of the narrow groove portion is not greater than 2.5 mm. In this case, the tire can reduce rolling resistance.

Preferably, a ratio D2/D1 of a groove depth D2 of the body portion of the circumferential narrow groove to a groove depth D1 of the circumferential narrow groove is not less than 0.25 and not greater than 0.70. In this case, the tire can suppress occurrence of tread chipping when released from the mold and can reduce rolling resistance.

The groove depth D2 of the body portion of the circumferential narrow groove, a groove depth D3 from the groove opening of the circumferential narrow groove to a position at which the wide portion has the maximum width WC2, and a groove depth D5 of the lateral sipe satisfy the following formula, $D 2 < D 5 < D 3 .$

In this case, the tire can suppress occurrence of tread chipping when released from the mold and a decrease in wet performance due to wear and can reduce rolling resistance.

It is provided a production method for the above-described heavy duty tire, the production method including a step of pressurizing and heating a green tire for the tire in a mold, wherein the mold includes a tread ring for forming the tread, the tread ring includes a pattern forming portion for forming the tread pattern, the pattern forming portion includes a main groove projection for forming the circumferential main groove, a narrow groove projection for forming the circumferential narrow groove, and lateral blades for forming the lateral sipes, the tread ring has a plurality of division surfaces traversing the pattern forming portion, the plurality of division surfaces divide the tread ring into a plurality of segments aligned in a circumferential direction, the plurality of segments are movable in a radial direction of the tire, and an angle of the lateral blade closest to the division surface on each of the segments, with respect to a movement direction of the segment, is not greater than 15 degrees.

In a conventional mold, the number of segments included in the tread ring, that is, the number of divisions of the tread ring, is set to 8 to 10. In the case where the number of divisions of the tread ring is set as in the conventional mold, the angle of the lateral blade closest to the division surface, with respect to the movement direction of the segment, is 18.0 to 22.5 degrees. In contrast, in the production method of the present disclosure, the angle of the lateral blade closest to the division surface, with respect to the movement direction of the segment, is not greater than 15 degrees. The production method can reduce the deviation between the projection direction of the lateral blade and the movement direction of the segment. The production method can inhibit the rubber from getting caught at the projection-blade connection portion. Stress concentration occurring in the vicinity of the projection-blade connection portion is reduced. The production method can suppress occurrence of tread chipping or blade damage when releasing the tire.

Preferably, a number of the segments included in the tread ring is not less than 17. In this case, in the mold used in the production method, the angle of the lateral blade closest to the division surface, with respect to the movement direction of the segment, can be set to be not greater than 10.6 degrees. The mold can further reduce the deviation between the projection direction of the lateral blade and the pulling direction. The production method can suppress occurrence of tread chipping or blade damage when releasing the tire.

Preferably, the radius RC1 of the arc representing the contour of the first inflection portion is larger than a shortest distance from the lateral blade closest to the division surface, to the division surface. In this case, the mold can suppress occurrence of tread chipping when releasing the tire.

Preferably, a contour of the division surface in a development view of the pattern forming portion includes at least one arc. In this case, the mold can suppress occurrence of tread chipping when releasing the tire.

Preferably, the lateral sipe formed by the lateral blade closest to the division surface has a cross-sectional shape which is asymmetrical with respect to a minimum width center line of the sipe body, the lateral sipe includes an outer groove wall formed by a first side surface on the division surface side of the lateral blade, and an inner groove wall formed by a second side surface located on a side opposite to the first side surface of the lateral blade, and a maximum width center line of the tubular portion is located on the outer groove wall side with respect to the minimum width center line of the sipe body. In this case, the mold can suppress occurrence of tread chipping when releasing the tire.

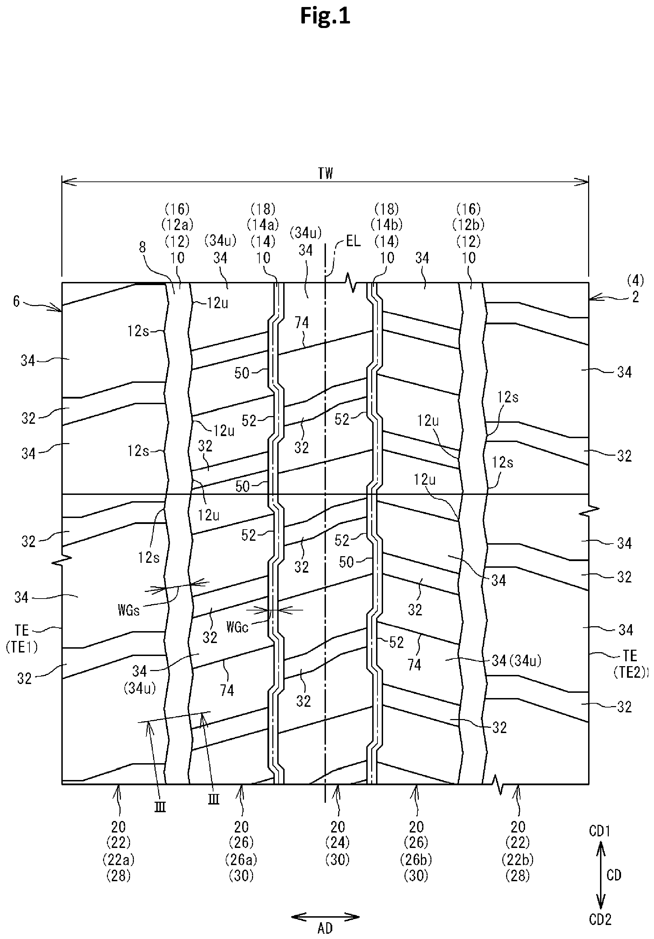

As described above, according to the present invention, a heavy duty tire that can suppress occurrence of tread chipping when released from a mold and a decrease in wet performance due to wear and can reduce rolling resistance, is obtained. This will be described in detail below with a heavy duty tire shown in FIG. 1 as an example.

### [Details of Embodiment of Present Invention]

### [Tire]

FIG. 1 is a plan view illustrating a development of a part of a tread 4 of a tire 2 according to one embodiment of the present invention. The tire 2 is mounted to a vehicle such as a truck and a bus. The tire 2 is a heavy duty tire.

A direction indicated by a double-headed arrow AD is the axial direction of the tire 2. The axial direction of the tire 2 means a direction parallel to the rotation axis of the tire 2. A direction indicated by a double-headed arrow CD is the circumferential direction of the tire 2. A direction perpendicular to the surface of the drawing sheet of FIG. 1 is the radial direction of the tire 2.

An alternate long and short dash line EL extending in the circumferential direction represents the equator plane of the tire 2.

A direction from the equator plane EL toward each end of a tread surface described later is the axially outer side of the tire 2, and a direction from each end of the tread surface toward the equator plane EL is the axially inner side of the tire 2.

A direction indicated by an arrow CD1 is a first circumferential direction side of the tire 2, and a direction indicated by an arrow CD2 is a second circumferential direction side of the tire 2. The tread 4 of the tire 2 comes into contact with a road surface from the first circumferential direction side toward the second circumferential direction side. The first circumferential direction side is a leading edge side of the tire 2, and the second circumferential direction side is a trailing edge side of the tire 2.

The tire 2 includes the tread 4. The tread 4 is formed from a crosslinked rubber. The tread 4 is located on the radially outer side of the tire 2 and extends in the circumferential direction. The outer circumferential surface of the tread 4 includes a tread surface 6. The tire 2 comes into contact with a road surface at the tread surface 6. The tread 4 has the tread surface 6 which comes into contact with a road surface.

The tread 4 is one of components included in the tire 2. The tire 2 includes a tread portion which comes into contact with a road surface, a pair of sidewall portions, and a pair of bead portions as portions thereof. The tread 4 is included in the tread portion.

In the present invention, the internal structure of the tire 2 is not limited to any particular internal structure. Although not described in detail, the tire 2 has a general internal structure as the internal structure of a heavy duty tire. The tread 4 is a component forming the internal structure.

Grooves 8 are formed on the tread 4. Accordingly, a tread pattern is formed. The tread 4 has the tread pattern.

FIG. 1 shows the tread pattern formed on the tread 4. Using this tread pattern as an example, an outline of the tread pattern to which the present invention is applied will be described.

The tread pattern in FIG. 1 is the tread pattern of a new tire 2, that is, a tread 4 that has not been worn.

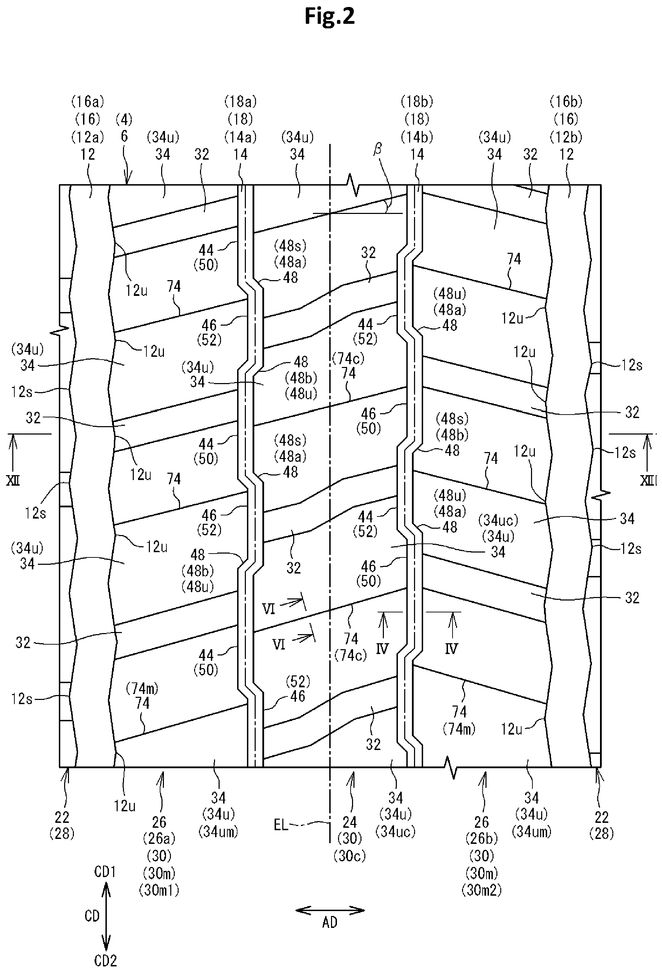

FIG. 2 shows a part of the tread pattern shown in FIG. 1.

The point of intersection of the tread surface 6 and the equator plane EL corresponds to an equator. In the case where the groove 8 is located on the equator plane EL, the equator is specified on the basis of a virtual outer surface obtained on the assumption that the groove 8 is not provided thereon.

A solid line (in other words, a position) indicated by reference character TE represents an end of the tread surface 6.

In the tire, when the end of the tread surface cannot be identified from the appearance, a position, on the outer surface of the tire, corresponding to an axially outer end of a ground-contact surface obtained when a standardized load is applied to the tire in a standardized state and the tire is brought into contact with a flat surface with a camber angle being set to 0°, is used as the end of the tread surface.

In the tread surface 6 shown in FIG. 1, one end TE of the tread surface 6 located on the left side of the equator plane EL is referred to as first end TE1. Another end TE of the tread surface 6 located on the right side of the equator plane EL is referred to as second end TE2. The end TE on the left side of the equator plane EL may be referred to as second end TE2, and the end TE on the right side of the equator plane EL may be referred to as first end TE1.

In FIG. 1, a length indicated by reference character TW is the width of the tread surface 6. The width TW of the tread surface 6 is the distance in the axial direction from the first end TE1 to the second end TE2 of the tread surface 6. The width TW of the tread surface 6 is represented as a length measured along the tread surface 6.

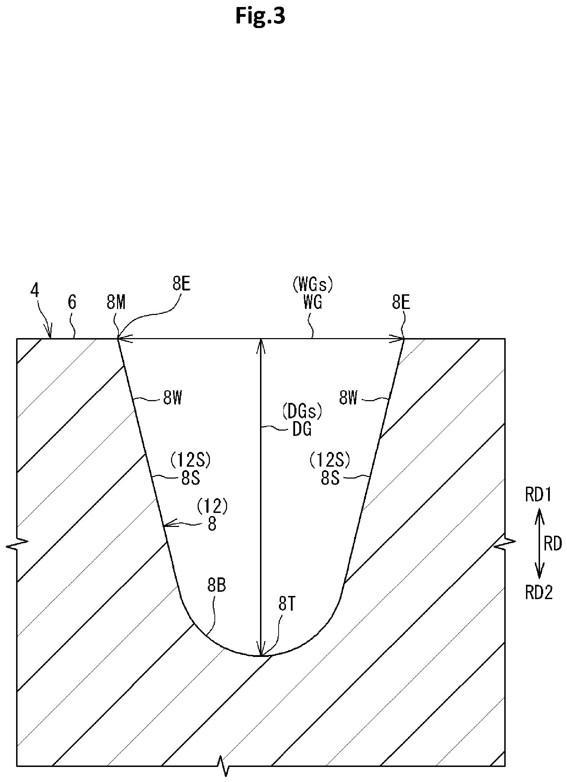

FIG. 3 is a cross-sectional view of FIG. 1 taken along a line III-III. FIG. 3 shows a cross-section of the groove 8, specifically, a shoulder circumferential groove described later. The main configuration of the groove 8 will be described with reference to FIG. 3.

In FIG. 3, a direction indicated by a double-headed arrow RD is the radial direction of the tire 2. A side indicated by an arrow RD1 is the radially outer side of the tire 2, and a side indicated by an arrow RD2 is the radially inner side of the tire 2. In the present invention, the cross-section of the groove 8 is represented as a cross-section along a plane perpendicular to the length direction of the groove 8.

The groove 8 has a pair of groove walls 8W extending between a groove opening 8M and a groove bottom 8T. In the groove 8, a portion including the groove bottom 8T is also referred to as bottom surface 8B. In this case, of each groove wall 8W, a portion other than the bottom surface 8B, that is, a portion between the bottom surface 8B and the groove opening 8M is also referred to as wall surface 8S.

The groove 8 has a pair of wall surfaces 8S including the groove opening 8M, and a bottom surface 8B including the groove bottom 8T.

The groove width of the groove 8 is represented as the shortest distance (hereinafter referred to as inter-wall surface distance) between a first wall surface 8S and a second wall surface 8S which are the pair of wall surfaces 8S. The inter-wall surface distance is measured along a plane including a pair of edges 8E forming the groove opening 8M or a plane parallel to this plane.

In FIG. 3, a length indicated by a double-headed arrow WG is the groove width of the groove 8 at the groove opening 8M. The groove width WG is measured along the plane including the pair of edges 8E forming the groove opening 8M. In the case where a portion of the groove 8 at the groove opening 8M is processed in a tapered manner, the groove width at the groove opening 8M of the groove 8 is represented on the basis of virtual edges obtained on the assumption that the portion of the groove 8 at the groove opening 8M is not processed in a tapered manner.

A length indicated by a double-headed arrow DG is the groove depth of the groove 8. The groove depth DG of the groove 8 is represented as the shortest distance from the plane including the left and right edges 8E to the groove bottom 8T of the groove 8.

The position, the groove width WG, and the groove depth DG of the groove 8 are determined as appropriate according to the specifications of the tire 2.

The groove bottom 8T is the deepest position in the cross-section of the groove 8. The distance from the plane including the left and right edges 8E forming the groove opening 8M, to the bottom surface 8B, is measured along a normal line of this plane. A position at which the distance from this plane to the bottom surface 8B is the largest is the groove bottom 8T. The direction of the normal line of the plane including the left and right edges 8E is the depth direction of the groove 8.

The bottom surface 8B shown in FIG. 3 is a curved surface. The bottom surface 8B may be composed of a flat surface. In this case, the width center of the flat surface constituting the bottom surface 8B is used as the groove bottom 8T.

In the case where a protrusion is provided on the bottom surface 8B, the groove bottom 8T is specified on the basis of a virtual bottom surface obtained on the assumption that this protrusion is not provided thereon.

The grooves 8 each having a groove width WG of less than 1.0 mm at the groove opening 8M are also referred to as sipes. The grooves 8 other than sipes are also referred to as ordinary grooves, and each have a groove width WG of not less than 1.0 mm at the groove opening 8M thereof.

A sipe may include a portion (hereinafter referred to as ordinary groove equivalent portion) having a groove width of not less than 1.0 mm, between the groove opening 8M and the groove bottom 8T thereof. In this case, the sipe becomes an ordinary groove when the tread 4 becomes worn and the ordinary groove equivalent portion is exposed.

An ordinary groove may include a portion (hereinafter referred to as sipe equivalent portion) having a groove width of less than 1.0 mm, between the groove opening 8M and the groove bottom 8T thereof. In this case, the ordinary groove becomes a sipe when the tread 4 becomes worn and the sipe equivalent portion is exposed.

An ordinary groove that has a narrow groove width and whose pair of groove walls can come into contact with each other when the tread comes into contact with a road surface and becomes deformed, is also referred to as narrow groove. An ordinary groove that has a wide groove width and whose pair of groove walls do not come into contact with each other even when the tread comes into contact with a road surface and becomes deformed, is also referred to as main groove.

A plurality of circumferential grooves 10 are formed on the tread 4 of the tire 2 so as to be aligned in the axial direction. Each circumferential groove 10 extends continuously in the circumferential direction. The tread 4 has the plurality of circumferential grooves 10 aligned in the axial direction and extending continuously in the circumferential direction.

In FIG. 3, a length indicated by a double-headed arrow DGs is the groove depth of the circumferential groove 10, specifically, a shoulder circumferential groove described later. The groove depth DGs of the shoulder circumferential groove is, for example, not less than 10 mm and not greater than 21 mm. From the viewpoint that the tire 2 can exhibit good wet performance, the groove depth DGs is preferably not less than 13 mm and not greater than 18 mm.

In the present invention, among the plurality of circumferential grooves formed on the tread, the circumferential groove located on each outermost side in the axial direction is a shoulder circumferential groove. The circumferential groove located on the equator plane is a center circumferential groove. In the case where no circumferential groove is provided on the equator plane, the circumferential groove closest to the equator plane is a center circumferential groove. In the case where a circumferential groove is located between the center circumferential groove and the shoulder circumferential groove, this circumferential groove is a middle circumferential groove.

The tread 4 of the tire 2 has four circumferential grooves 10. Among the four circumferential grooves 10, the circumferential groove 10 located on each outermost side in the axial direction is a shoulder circumferential groove 12. The circumferential groove 10 closest to the equator plane EL is a center circumferential groove 14. The tread 4 has a pair of such center circumferential grooves 14 and a pair of such shoulder circumferential grooves 12.

Of the pair of center circumferential grooves 14, the center circumferential groove 14 located on the first end TE1 side of the tread surface 6 is also referred to as first center circumferential groove 14a, and the center circumferential groove 14 located on the second end TE2 side of the tread surface 6 is also referred to as second center circumferential groove 14b.

Of the pair of shoulder circumferential grooves 12, the shoulder circumferential groove 12 located on the first end TE1 side of the tread surface 6 is also referred to as first shoulder circumferential groove 12a, and the shoulder circumferential groove 12 located on the second end TE2 side of the tread surface 6 is also referred to as second shoulder circumferential groove 12b.

Each shoulder circumferential groove 12 of the tire 2 has a groove width with which a pair of wall surfaces 12S do not come into contact with each other even when the tread 4 comes into contact with a road surface and becomes deformed. The shoulder circumferential groove 12 is the above-described main groove and is also referred to as circumferential main groove 16. As described later, each center circumferential groove 14 has a groove width with which a pair of wall surfaces come into contact with each other at a narrow groove portion when the tread 4 comes into contact with a road surface and becomes deformed. The center circumferential groove 14 is the above-described narrow groove and is also referred to as circumferential narrow groove 18.

The plurality of circumferential grooves 10 includes the circumferential main grooves 16 and the circumferential narrow grooves 18.

The tread 4 of the tire 2 has the two shoulder circumferential grooves 12 arranged with the equator plane EL located therebetween, that is, the first shoulder circumferential groove 12a and the second shoulder circumferential groove 12b. The first shoulder circumferential groove 12a is also referred to as first circumferential main groove 16a, and the second shoulder circumferential groove 12b is also referred to as second circumferential main groove 16b.

The tread 4 further has the two center circumferential grooves 14 arranged with the equator plane EL located therebetween, that is, the first center circumferential groove 14a and the second center circumferential groove 14b. The first center circumferential groove 14a is also referred to as first circumferential narrow groove 18a, and the second center circumferential groove 14b is also referred to as second circumferential narrow groove 18b.

In FIG. 1, a length indicated by a double-headed arrow WGc is the groove width at the groove opening of the center circumferential groove 14. A length indicated by a double-headed arrow WGs is the groove width at the groove opening of the shoulder circumferential groove 12.

The ratio (WGc/TW) of the groove width WGc of the center circumferential groove 14 to the width TW of the tread surface 6 is not greater than 2.0%. As shown in FIG. 1, the groove width WGs of the shoulder circumferential groove 12 is wider than the groove width WGc of the center circumferential groove 14. The ratio (WGs/TW) of the groove width WGs of the shoulder circumferential groove 12 to the width TW of the tread surface 6 exceeds 2.0%. Specifically, the ratio (WGs/TW) is preferably not less than 4.0% and not greater than 10%.

Each shoulder circumferential groove 12 of the tire 2, that is, each circumferential main groove 16, includes outer peaks 12s closer to the end TE of the tread surface 6, and inner peaks 12u closer to the equator plane EL. The outer peaks 12s and the inner peaks 12u are arranged alternately in the circumferential direction. The circumferential main groove 16 extends in the circumferential direction while alternately passing through the outer peaks 12s and the inner peaks 12u. The circumferential main groove 16 extends in a zigzag manner in the circumferential direction. The circumferential main groove 16 may extend in a straight manner in the circumferential direction.

Each center circumferential groove 14 of the tire 2 extends in the circumferential direction while meandering. The center circumferential groove 14 may extend in a straight manner in the circumferential direction.

Each center circumferential groove 14 of the tire 2 includes first narrow grooves 44 closer to the first end TE1 of the tread surface 6, second narrow grooves 46 closer to the second end TE2 of the tread surface 6, and connection narrow grooves 48 connecting the first narrow grooves 44 and the second narrow grooves 46.

Among the connection narrow grooves 48, the connection narrow grooves 48 connecting the first narrow grooves 44 and the second narrow grooves 46 located on the trailing edge side of the first narrow grooves 44 are also referred to as first connection narrow grooves 48a. The connection narrow grooves 48 connecting the second narrow grooves 46 and the first narrow grooves 44 located on the trailing edge side of the second narrow grooves 46 are also referred to as second connection narrow grooves 48b.

When a unit configured by connecting the first narrow groove 44, the first connection narrow groove 48a, the second narrow groove 46, and the second connection narrow groove 48b in this order is defined as a groove unit, the center circumferential groove 14 is formed by connecting a plurality of such groove units in the circumferential direction. The first narrow grooves 44 and the second narrow grooves 46 are arranged alternately in the circumferential direction.

The first narrow grooves 44 and the second narrow grooves 46 of the center circumferential groove 14 extend in a straight manner in the circumferential direction. The first narrow grooves 44 and the second narrow grooves 46 have a constant length in the circumferential direction.

The first narrow grooves 44 of the second center circumferential groove 14b have the same length as the second narrow grooves 46 of the first center circumferential groove 14a. The second narrow grooves 46 of the second center circumferential groove 14b have the same length as the first narrow grooves 44 of the first center circumferential groove 14a.

The first narrow grooves 44 of the first center circumferential groove 14a and the second narrow grooves 46 of the second center circumferential groove 14b are located on the end TE side of the tread surface 6. The second narrow grooves 46 of the first center circumferential groove 14a and the first narrow grooves 44 of the second center circumferential groove 14b are located on the equator plane EL side.

Hereinafter, for convenience of description, the first narrow grooves 44 of the first center circumferential groove 14a and the second narrow grooves 46 of the second center circumferential groove 14b are referred to as outer narrow grooves 50, and the second narrow grooves 46 of the first center circumferential groove 14a and the first narrow grooves 44 of the second center circumferential groove 14b are referred to as inner narrow grooves 52. The first connection narrow grooves 48a of the first center circumferential groove 14a and the second connection narrow grooves 48b of the second center circumferential groove 14b are referred to as outer connection grooves 48s. Each outer connection groove 48s connects the outer narrow groove 50 and the inner narrow groove 52 located on the trailing edge side of this outer narrow groove 50. The second connection narrow grooves 48b of the first center circumferential groove 14a and the first connection narrow grooves 48a of the second center circumferential groove 14b are referred to as inner connection grooves 48u. Each inner connection groove 48u connects the inner narrow groove 52 and the outer narrow groove 50 located on the trailing edge side of this inner narrow groove 52.

Each of the first center circumferential groove 14a and the second center circumferential groove 14b, that is, each of the first circumferential narrow groove 18a and the second circumferential narrow groove 18b, includes outer narrow grooves 50 closer to the end TE of the tread surface 6, inner narrow grooves 52 closer to the equator plane EL, outer connection grooves 48s each connecting the outer narrow groove 50 and the inner narrow groove 52 located on the trailing edge side of this outer narrow groove 50, and inner connection grooves 48u each connecting the inner narrow groove 52 and the outer narrow groove 50 located on the trailing edge side of this inner narrow groove 52. The outer narrow grooves 50 and the inner narrow grooves 52 are arranged alternately in the circumferential direction.

As described above, the tread 4 has the plurality of circumferential grooves 10. The plurality of circumferential grooves 10 demarcate a plurality of land portions 20 in the tread 4.

In the present invention, among the plurality of land portions formed in the tread, the land portion located on each outermost side in the axial direction is a shoulder land portion. The land portion located on the equator plane is a center land portion. In the case where no land portion is provided on the equator plane, the land portion closest to the equator plane is a center land portion. In the case where a land portion is located between the center land portion and the shoulder land portion, this land portion is a middle land portion.

The tread 4 of the tire 2 have five land portions 20. Among the five land portions 20, the land portion 20 located on each outermost side in the axial direction is a shoulder land portion 22. The shoulder land portion 22 includes the end TE of the tread surface 6. The land portion 20 located on the equator plane EL is a center land portion 24. The land portion 20 located between the center land portion 24 and the shoulder land portion 22 is a middle land portion 26. The tread 4 has such a center land portion 24, a pair of such middle land portions 26, and a pair of such shoulder land portions 22.

Of the pair of middle land portions 26, the middle land portion 26 located on the first end TE1 side of the tread surface 6 is also referred to as first middle land portion 26a, and the middle land portion 26 located on the second end TE2 side of the tread surface 6 is also referred to as second middle land portion 26b.

Of the pair of shoulder land portions 22, the shoulder land portion 22 located on the first end TE1 side of the tread surface 6 is also referred to as first shoulder land portion 22a, and the shoulder land portion 22 located on the second end TE2 side of the tread surface 6 is also referred to as second shoulder land portion 22b.

Although not described in detail, the width of each land portion 20 is determined as appropriate according to the specifications of the tire 2.

In the present invention, among the plurality of land portions, the land portion located on each outermost side in the axial direction and including the end of the tread surface is also referred to as outer land portion. The plurality of land portions include a pair of such outer land portions. A land portion located between the pair of outer land portions is also referred to as inner land portion.

The tread 4 shown in FIG. 1 has the center land portion 24, the pair of middle land portions 26, and the pair of shoulder land portions 22. Among these land portions 20, the two shoulder land portions 22 each located on the outermost side in the axial direction and including the end TE of the tread surface 6 are outer land portions 28. The center land portion 24 and the pair of middle land portions 26 which are located between the pair of shoulder land portions 22 are inner land portions 30. The center land portion 24 is also referred to as center inner land portion 30c. Each of the pair of middle land portions 26 is also referred to as middle inner land portion 30m. Of the pair of middle land portions 26, the first middle land portion 26a is also referred to as first middle inner land portion 30m1, and the second middle land portion 26b is also referred to as second middle inner land portion 30m2.

The plurality of land portions 20 formed in the tread 4 include a pair of outer land portions 28 each located on the outermost side in the axial direction and including the end TE of the tread surface 6, and a plurality of inner land portions 30 located between the pair of outer land portions 28 and aligned in the axial direction. In the tire 2, at least two inner land portions 30 are provided between the pair of outer land portions 28. The tread 4 shown in FIG. 1 includes three inner land portions 30.

On each of the first end TE1 side and the second end TE2 side of the tread surface 6, the shoulder circumferential groove 12 is present between the shoulder land portion 22 and the middle land portion 26. As described above, the shoulder circumferential groove 12 is the circumferential main groove 16. The circumferential main groove 16 is located between the outer land portion 28 and the inner land portion 30 located axially inward of this outer land portion 28.

The center circumferential groove 14 is present between the middle land portion 26 and the center land portion 24. As described above, the center circumferential groove 14 is the circumferential narrow groove 18. The circumferential narrow groove 18 is located between two adjacent inner land portions 30.

In the tire 2, on each of all the land portions 20 formed in the tread 4, a plurality of lateral grooves 32 are formed so as to traverse the land portion 20. Accordingly, a plurality of blocks 34 are formed in the land portion 20 so as to be aligned in the circumferential direction. In the tread 4 of the tire 2, the plurality of land portions 20 are aligned in the axial direction, and each land portion 20 has a plurality of blocks 34 aligned in the circumferential direction. The tread pattern of the tire 2 is a block pattern.

Although not described in detail, the lateral grooves 32 are ordinary grooves. The lateral grooves 32 are shallower than the circumferential grooves 10.

Each lateral groove 32 formed on the center inner land portion 30c extends between the inner narrow groove 52 of the first circumferential narrow groove 18a and the inner narrow groove 52 of the second circumferential narrow groove 18b. Each lateral groove 32 formed on each middle inner land portion 30m extends between the inner peak 12u of the circumferential main groove 16 and the outer narrow groove 50 of the circumferential narrow groove 18. Each lateral groove 32 formed on each outer land portion 28 extends between the outer peak 12s of the circumferential main groove 16 and the end TE of the tread surface 6.

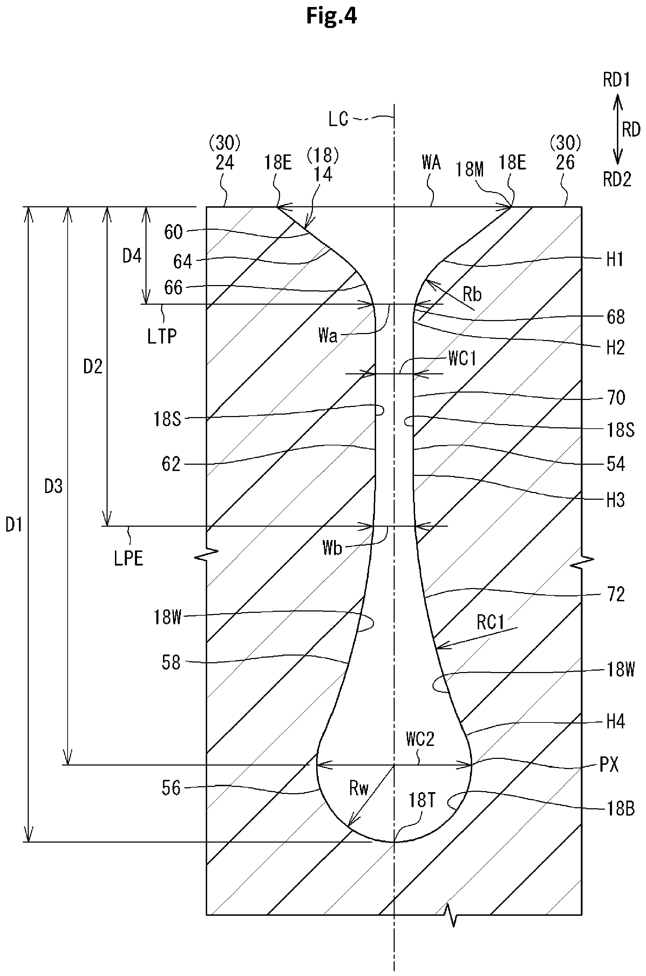

FIG. 4 is a cross-sectional view of FIG. 2 taken along a line IV-IV. FIG. 4 shows a cross-section of the center circumferential groove 14, that is, the circumferential narrow groove 18.

The circumferential narrow groove 18 includes a pair of groove walls 18W connecting a groove opening 18M and a groove bottom 18T. In the circumferential narrow groove 18, a portion including the groove bottom 18T is also referred to as bottom surface 18B. In this case, of each groove wall 18W, a portion other than the bottom surface 18B, that is, a portion between the bottom surface 18B and the groove opening 18M, is also referred to as wall surface 18S. The circumferential narrow groove 18 has a pair of wall surfaces 18S including the groove opening 18M, and a bottom surface 18B including the groove bottom 18T.

An alternate long and short dash line LC is a center line of the circumferential narrow groove 18. The circumferential narrow groove 18 has a cross-sectional shape which is symmetrical with respect to the center line LC. The center line LC extends in the depth direction of the circumferential narrow groove 18 and passes through the groove bottom 18T.

The circumferential narrow groove 18 includes a body portion 54, a wide portion 56, and a first inflection portion 58. The body portion 54 includes the groove opening 18M of the circumferential narrow groove 18. The wide portion 56 includes the groove bottom 18T of the circumferential narrow groove 18. The first inflection portion 58 is located between the body portion 54 and the wide portion 56 in the radial direction. When the tread 4 becomes worn and the body portion 54 disappears, the first inflection portion 58 is exposed. When the first inflection portion 58 disappears, the wide portion 56 is exposed.

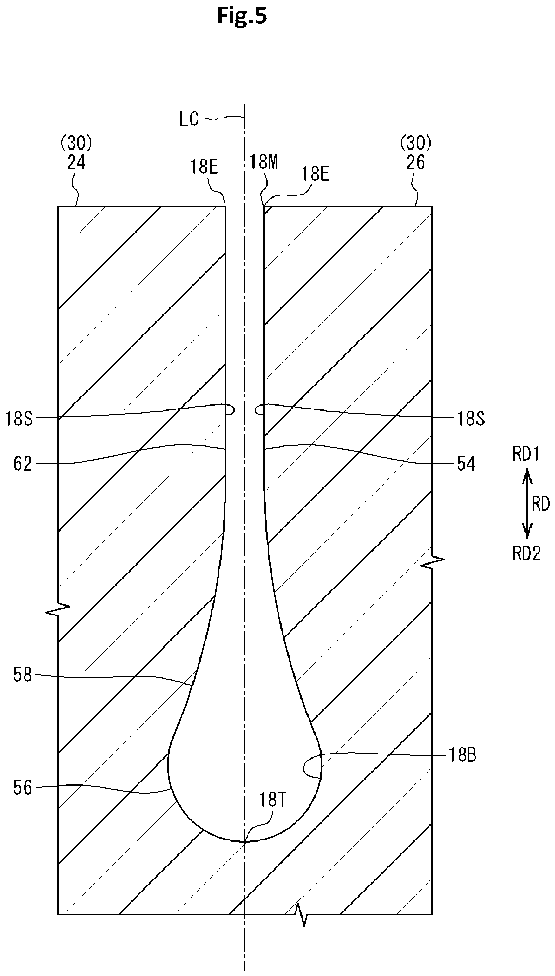

The body portion 54 of the tire 2 includes a funnel portion 60 and a narrow groove portion 62. A portion at the groove opening 18M of the circumferential narrow groove 18 is processed in a tapered manner. As shown in FIG. 5, the body portion 54 may be composed of only the narrow groove portion 62 without providing the funnel portion 60.

The funnel portion 60 includes the groove opening 18M of the circumferential narrow groove 18. The funnel portion 60 is tapered inward from the groove opening 18M.

In FIG. 4, a length indicated by a double-headed arrow WA is the groove width at the groove opening 18M of the funnel portion 60. The groove width WA of the funnel portion 60 is preferably not less than 0.15 times and not greater than 0.45 times the groove width WGs of the shoulder circumferential groove 12, that is, the circumferential main groove 16.

The funnel portion 60 includes an inclined portion 64 and a connection portion 66. The inclined portion 64 includes the groove opening 18M of the circumferential narrow groove 18. The groove width of the inclined portion 64 gradually decreases from the groove opening 18M toward the connection portion 66. In the cross-section of the circumferential narrow groove 18 shown in FIG. 4, the contour of the inclined portion 64 is represented by a straight line. A position indicated by reference character H1 is the radially inner end of the inclined portion 64.

The connection portion 66 connects the inclined portion 64 and the narrow groove portion 62. The radially inner end H1 of the inclined portion 64 is also the radially outer end of the connection portion 66. The position H1 is the boundary between the inclined portion 64 and the connection portion 66.

The groove width of the connection portion 66 gradually decreases from the radially outer end H1 toward the narrow groove portion 62. In the cross-section of the circumferential narrow groove 18 shown in FIG. 4, the contour of the connection portion 66 is represented by an arc. An arrow Rb indicates the radius of the arc representing the contour of the connection portion 66. The arc representing the contour of the connection portion 66 is tangent to the straight line representing the contour of the inclined portion 64, at the boundary H1.

In the cross-section of the circumferential narrow groove 18 shown in FIG. 4, the portion represented by the arc having the radius Rb is also referred to as upper arc portion 68. A position indicated by reference character H2 is the radially inner end of the upper arc portion 68. The above-described boundary H1 is also the radially outer end of the upper arc portion 68.

The narrow groove portion 62 is located radially inward of the funnel portion 60. The narrow groove portion 62 is connected to the funnel portion 60. In FIG. 4, a length indicated by a double-headed arrow WC1 is the minimum width of the narrow groove portion 62. A minimum width center line of the narrow groove portion 62 coincides with the above-described center line LC.

The minimum width WC1 of the narrow groove portion 62 is set such that the pair of wall surfaces 18S of the circumferential narrow groove 18 come into contact with each other at the narrow groove portion 62 when the tread 4 comes into contact with a road surface and becomes deformed.

The narrow groove portion 62 extends in the depth direction of the circumferential narrow groove 18. The narrow groove portion 62 shown in FIG. 4 has a portion extending in a straight manner in the depth direction (hereinafter also referred to as straight portion 70). The straight portion 70 is a portion, of the narrow groove portion 62, having a groove width WC1 which is uniform in the depth direction. The narrow groove portion 62 includes the straight portion 70 having the groove width WC1 which is uniform in the depth direction. Although not shown, the narrow groove portion 62 may be formed, for example, such that the groove width thereof gradually increases from the position at which the narrow groove portion 62 has the minimum width WC1, toward each of the funnel portion 60 and the first inflection portion 58.

In the case where the portion at the groove opening 8M of the groove 8 is processed in a tapered manner as described above, the groove width at the groove opening 8M of the groove 8 is represented on the basis of virtual edges obtained on the assumption that the portion at the groove opening 8M of the groove 8 is not processed in a tapered manner. The groove width WGc at the groove opening 18M of the circumferential narrow groove 18 shown in FIG. 4 is represented as the minimum width WC1 of the narrow groove portion 62.

In the cross-section of the circumferential narrow groove 18, the contour of the straight portion 70 is represented by a straight line. The above-described radially inner end H2 of the upper arc portion 68 is also the radially outer end of the straight portion 70. The position H2 is the boundary between the upper arc portion 68 and the straight portion 70. The straight line representing the contour of the straight portion 70 is tangent to the arc representing the contour of the upper arc portion 68, at the boundary H2. In FIG. 4, a position indicated by reference character H3 is the radially inner end of the straight portion 70.

The wide portion 56 is located radially inward of the body portion 54. The wide portion 56 includes the groove bottom 18T of the circumferential narrow groove 18. The wide portion 56 has a rounded contour. The wide portion 56 is curved so as to bulge outward from the inner side thereof.

In FIG. 4, a length indicated by a double-headed arrow WC2 is the maximum width of the wide portion 56. A maximum width center line of the wide portion 56 coincides with the above-described center line LC.

A position indicated by reference character PX is a position at which the wide portion 56 has the maximum width WC2 (hereinafter referred to as maximum width position). A portion of the circumferential narrow groove 18 except for the body portion 54, that is, a radially inner portion of the circumferential narrow groove 18, is tapered outward from the maximum width position PX and is tapered inward from the maximum width position PX.

In the contour of the cross-section of the circumferential narrow groove 18 shown in FIG. 4, the wide portion 56 of the tire 2 is represented by a single arc having a radius Rw. The center of the arc representing the contour of the wide portion 56 is located on the center line LC. The radius Rw of the arc representing the contour of the wide portion 56 is equal to half the maximum width WC2 of the wide portion 56.

The first inflection portion 58 connects the narrow groove portion 62 and the wide portion 56. The groove width of the first inflection portion 58 gradually increases from the narrow groove portion 62 toward the wide portion 56. The first inflection portion 58 is curved so as to be recessed inward from the outer side thereof. Specifically, in the cross-section of the circumferential narrow groove 18, the contour of the first inflection portion 58 is represented by an arc. In FIG. 4, an arrow RC1 indicates the radius of the arc representing the contour of the first inflection portion 58.

In the cross-section of the circumferential narrow groove 18 shown in FIG. 4, the portion represented by the arc having the radius RC1 is also referred to as first boundary arc portion 72. The above-described radially inner end H3 of the straight portion 70 is the radially outer end of the first boundary arc portion 72. The position H3 is the boundary between the straight portion 70 and the first boundary arc portion 72. The arc representing the contour of the first boundary arc portion 72 is tangent to the straight line representing the contour of the straight portion 70, at the boundary H3. A position indicated by reference character H4 is the radially inner end of the first boundary arc portion 72. The radially inner end H4 is the radially inner end of the first inflection portion 58 and is the boundary with the wide portion 56.

In FIG. 4, a position indicated by a solid line LTP is the boundary between the funnel portion 60 and the narrow groove portion 62. The boundary LTP is represented as a position at which, in the boundary portion between the funnel portion 60 and the narrow groove portion 62, the circumferential narrow groove 18 has a width Wa which is 1.1 times the minimum width WC1 of the narrow groove portion 62. In the case where the portion where the circumferential narrow groove 18 has a width Wa which is 1.1 times the minimum width WC1 has a constant length, the radially inner end of this portion is used as the boundary LTP.

A position indicated by a solid line LPE is the boundary between the narrow groove portion 62 and the first inflection portion 58, in other words, the boundary between the body portion 54 and the first inflection portion 58. The boundary LPE is represented as a position at which, in the boundary portion between the body portion 54 and the first inflection portion 58, the circumferential narrow groove 18 has a width Wb which is 1.1 times the minimum width WC1 of the narrow groove portion 62. In the case where the portion where the circumferential narrow groove 18 has a width Wb which is 1.1 times the minimum width WC1 has a constant length, the radially outer end of this portion is used as the boundary LPE.

In FIG. 4, a length indicated by a double-headed arrow D1 is the groove depth of the circumferential narrow groove 18. A length indicated by a double-headed arrow D2 is the groove depth of the body portion 54 of the circumferential narrow groove 18. The groove depth D2 is represented as the distance in the depth direction from the groove opening 18M of the circumferential narrow groove 18 to the boundary LPE between the body portion 54 and the first inflection portion 58. A length indicated by a double-headed arrow D3 is the groove depth from the groove opening 18M of the circumferential narrow groove 18 to the position PX at which the wide portion 56 has the maximum width WC2. The groove depth D3 is also referred to as maximum width groove depth. A length indicated by a double-headed arrow D4 is the groove depth of the funnel portion 60. The groove depth D4 is represented as the distance in the depth direction from the groove opening 18M of the circumferential narrow groove 18 to the boundary LTP between the funnel portion 60 and the narrow groove portion 62.

The groove depth D1 of the circumferential narrow groove 18 of the tire 2 is the same as the groove depth DGs of the shoulder circumferential groove 12, or the circumferential narrow groove 18 is shallower than the shoulder circumferential groove 12. Specifically, the ratio D1/DGs of the groove depth D1 of the circumferential narrow groove 18 to the groove depth DGs of the shoulder circumferential groove 12 is not less than 0.75 and not greater than 1.00.

As described above, in the tread 4 of the tire 2, the plurality of land portions 20 are formed so as to be aligned in the axial direction. On each block 34 (hereinafter referred to as inner block 34u) formed in each inner land portion 30 located between the pair of outer land portions 28 among the plurality of land portions 20, a lateral sipe 74 is formed. In other words, the inner land portion 30 has lateral sipes 74.

Each inner land portion 30 includes a plurality of inner blocks 34u aligned in the circumferential direction. The inner land portion 30 has a plurality of lateral sipes 74 aligned in the circumferential direction.

The tread 4 of the tire 2 includes the three inner land portions 30. As shown in FIG. 2, each of the three inner land portions 30 has lateral sipes 74. In the tire 2, among the plurality of inner land portions 30 provided in the tread 4, it is sufficient that at least one inner land portion 30 has lateral sipes 74. Only the center inner land portion 30c may have lateral sipes 74, or only the pair of middle inner land portions 30m may each have lateral sipes 74.

In the tire 2, the center inner land portion 30c and the pair of middle inner land portions 30m each have lateral sipes 74. The lateral sipe 74 (hereinafter referred to as center lateral sipe 74c) formed on each block (hereinafter referred to as center inner block 34uc) of the center inner land portion 30c extends between the outer narrow groove 50 of the first circumferential narrow groove 18a and the outer narrow groove 50 of the second circumferential narrow groove 18b. The lateral sipe 74 (hereinafter referred to as middle lateral sipe 74m) formed on each block (middle inner block 34um) of each middle inner land portion 30m extends between the vicinity of the inner peak 12u of the circumferential main groove 16 and the inner narrow groove 52 of the circumferential narrow groove 18.

The middle lateral sipes 74m and the center lateral sipes 74c provided in the tire 2 are connected to the circumferential narrow grooves 18. In other words, the lateral sipes 74 of the tire 2 connect to the circumferential narrow grooves 18.

The lateral sipe 74 provided on each inner block 34u extends between the two circumferential grooves 10 arranged with the inner block 34u located therebetween. The lateral sipe 74 is a transverse sipe that traverses the inner block 34u.

One end of the lateral sipe 74 may be located within the inner block 34u, and may be connected at another end thereof to a circumferential groove 10. In this case, the lateral sipe 74 is connected to one circumferential groove 10.

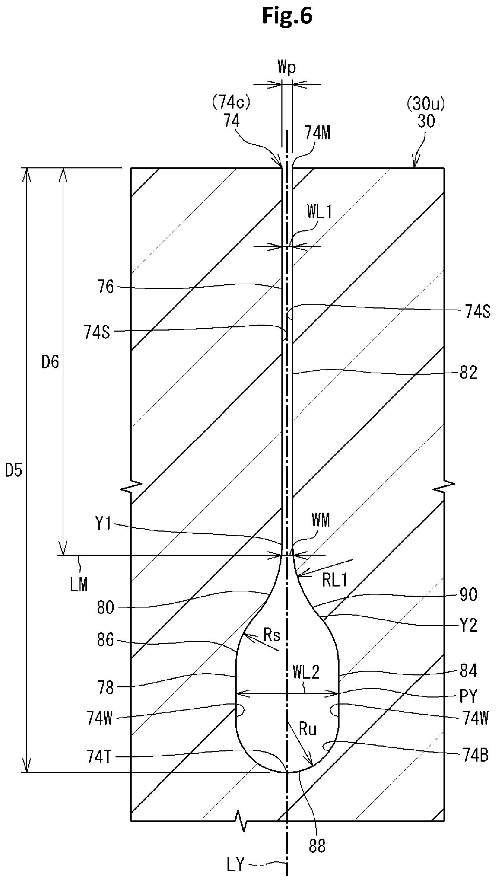

FIG. 6 shows a cross-section of the lateral sipe 74 taken along a line VI-VI in FIG. 2. The cross-section of the lateral sipe 74 shown in FIG. 6 is a cross-section of the center lateral sipe 74c. As described above, the lateral sipe 74 is also provided on the middle inner block 34um. The cross-sectional shape of the lateral sipe 74 on the middle inner block 34um, that is, the middle lateral sipe 74m, is the same as the cross-sectional shape of the center lateral sipe 74c. The cross-sectional shape of the lateral sipe 74 is described based on the center lateral sipe 74c, and the description of the cross-sectional shape of the middle lateral sipe 74m is omitted.

The lateral sipe 74 includes a pair of groove walls 74W connecting a groove opening 74M and a groove bottom 74T. In the lateral sipe 74, a portion including the groove bottom 74T is also referred to as bottom surface 74B. In this case, of each groove wall 74W, a portion other than the bottom surface 74B, that is, a portion between the bottom surface 74B and the groove opening 74M, is also referred to as wall surface 74S. The lateral sipe 74 has a pair of wall surfaces 74S including the groove opening 74M, and a bottom surface 74B including the groove bottom 74T.

An alternate long and short dash line LY is a center line of the lateral sipe 74. The lateral sipe 74 has a cross-sectional shape which is symmetrical with respect to the center line LY. The center line LY extends in the depth direction of the lateral sipe 74 and passes through the groove bottom 74T.

The lateral sipe 74 includes a sipe body 76, a tubular portion 78, and a second inflection portion 80. The sipe body 76 includes the groove opening 74M of the lateral sipe 74. The tubular portion 78 includes the groove bottom 74T of the lateral sipe 74. The second inflection portion 80 is located between the sipe body 76 and the tubular portion 78 in the radial direction. When the tread 4 becomes worn and the sipe body 76 disappears, the second inflection portion 80 is exposed. When the second inflection portion 80 disappears, the tubular portion 78 is exposed.

The sipe body 76 extends in the depth direction from the groove opening 74M. In FIG. 6, a length indicated by a double-headed arrow WL1 is the minimum width of the sipe body 76. A minimum width center line of the sipe body 76 coincides with the above-described center line LY.

The sipe body 76 is the above-described sipe. The groove width of the sipe body 76 is less than 1.0 mm. Therefore, the minimum width WL1 is also less than 1.0 mm. As described above, the sipe body 76 includes the groove opening 74M of the lateral sipe 74. A groove width Wp at the groove opening 74M of the lateral sipe 74 is less than 1.0 mm.

In FIG. 6, a solid line LM is a boundary line between the sipe body 76 and the second inflection portion 80. A length indicated by a double-headed arrow WM is the groove width of the lateral sipe 74 measured along the boundary line LM. The boundary line LM is set at a position at which the groove width WM is 1.0 mm.

The groove width of a portion outside the boundary line LM, that is, the sipe body 76, is less than 1.0 mm. The groove width of a portion inside the boundary line LM, that is, the second inflection portion 80 and the tubular portion 78, is not less than 1.0 mm. The groove widths of the second inflection portion 80 and the tubular portion 78 are wider than the groove width of the sipe body 76.

The sipe body 76 shown in FIG. 6 has a portion extending in a straight manner in the depth direction from the groove opening 74M (hereinafter referred to as upper straight portion 82). The upper straight portion 82 is a portion, of the sipe body 76, having a groove width WL1 which is uniform in the depth direction. The sipe body 76 includes the upper straight portion 82 having a groove width WL1 which is uniform in the depth direction. The upper straight portion 82 extends in a straight manner in the depth direction and the length direction thereof. The upper straight portion 82 is a two-dimensional sipe spreading like a flat plate. In FIG. 6, a position indicated by reference character Y1 is the radially inner end of the upper straight portion 82. Although not shown, the upper straight portion 82 may be a three-dimensional sipe that extends in a zigzag manner in the depth direction and the length direction thereof.

The tubular portion 78 is located radially inward of the sipe body 76. As described above, the tubular portion 78 includes the groove bottom 74T of the lateral sipe 74. In FIG. 6, a position indicated by reference character Y2 is the boundary between the tubular portion 78 and the second inflection portion 80.

A length indicated by a double-headed arrow WL2 is the maximum width of the tubular portion 78. A position indicated by reference character PY is a position at which the tubular portion 78 has the maximum width WL2 (hereinafter referred to as maximum width position). The tubular portion 78 is tapered outward from a portion where the tubular portion 78 has the maximum width WL2. The tubular portion 78 is tapered inward from the portion where the tubular portion 78 has the maximum width WL2.

In the contour of the tubular portion 78 shown in FIG. 6, the portion where the tubular portion 78 has the maximum width WL2 is represented by a straight line, and the sipe body 76 side and the groove bottom 74T side of this portion represented by the straight line are represented by arcs. The tubular portion 78 has a track-like cross-sectional shape. The cross-sectional shape of the tubular portion 78 may be circular or elliptical.

Of the tubular portion 78, the portion represented by the straight line is also referred to as lower straight portion 84. In FIG. 6, an arrow Rs indicates the radius of the arc representing the contour of the tubular portion 78 on the sipe body 76 side of the lower straight portion 84. Of the tubular portion 78, the portion represented by the arc having the radius Rs is also referred to as upper arc portion 86. An arrow Ru indicates the radius of the arc representing the contour of the tubular portion 78 on the groove bottom 74T side of the lower straight portion 84. Of the tubular portion 78, the portion represented by the arc having the radius Ru is also referred to as lower arc portion 88.

The center of the arc representing the contour of the upper arc portion 86 and the center of the arc representing the contour of the lower arc portion 88 are located on the center line LY of the lateral sipe 74. Twice the radius Rs of the arc representing the contour of the upper arc portion 86 and twice the radius Ru of the arc representing the contour of the lower arc portion 88 are each equal to the maximum width WL2 of the tubular portion 78.

The second inflection portion 80 connects the sipe body 76 and the tubular portion 78. The groove width of the second inflection portion 80 gradually increases from the sipe body 76 toward the tubular portion 78. The second inflection portion 80 is curved so as to be recessed inward from the outer side thereof. Specifically, in the cross-section of the lateral sipe 74, the contour of the second inflection portion 80 is represented by an arc. In FIG. 6, an arrow RL1 indicates the radius of the arc representing the contour of the second inflection portion 80.

In the cross-section of the lateral sipe 74 shown in FIG. 6, the portion represented by the arc having the radius RL1 is also referred to as second boundary arc portion 90. The above-described radially inner end Y1 of the upper straight portion 82 is also the radially outer end of the second boundary arc portion 90. The position Y1 is the boundary between the upper straight portion 82 and the second boundary arc portion 90. The arc representing the contour of the second boundary arc portion 90 is tangent to the straight line representing the contour of the upper straight portion 82, at the boundary Y1. The above-described boundary Y2 between the second inflection portion 80 and the tubular portion 78 is the radially inner end of the second boundary arc portion 90. The radially inner end Y2 is the boundary between the second boundary arc portion 90 and the tubular portion 78. The arc representing the contour of the second boundary arc portion 90 is tangent to the arc representing the contour of the upper arc portion 86 of the tubular portion 78, at the boundary Y2.

In FIG. 6, a length indicated by a double-headed arrow D5 is the groove depth of the lateral sipe 74. A length indicated by a double-headed arrow D6 is the groove depth of the sipe body 76 of the lateral sipe 74. The groove depth D6 of the sipe body 76 is represented as the distance in the depth direction from the groove opening 74M of the lateral sipe 74 to the boundary LM between the sipe body 76 and the second inflection portion 80.

The lateral sipe 74 is shallower than the circumferential narrow groove 18. Specifically, the ratio D5/D1 of the groove depth D5 of the lateral sipe 74 to the groove depth D1 of the circumferential narrow groove 18 is not less than 0.50 and not greater than 1.00.

On the tread 4 of the tire 2, the plurality of circumferential grooves 10, the plurality of lateral grooves 32, and the plurality of lateral sipes 74 are formed. The tread 4 has a tread pattern including the plurality of circumferential grooves 10, the plurality of lateral grooves 32, and the plurality of lateral sipes 74. The tire 2 having such a tread pattern is produced as follows.

### [Production Method for Tire]

In a production method for a tire, a green tire (uncrosslinked tire) is prepared by combining components such as a tread and sidewalls prepared as parts. The green tire is placed in a tire mold described later, and is pressurized and heated in this mold. Accordingly, an uncrosslinked rubber composition included in the green tire is crosslinked to obtain a tire that is a crosslinked product of the green tire.

The production method for a tire includes a step of preparing a green tire and a step of pressurizing and heating the green tire in a mold.

Pressurizing and heating the green tire in the mold is also referred to as vulcanization molding, and the step of pressurizing and heating the green tire in the mold is also referred to as vulcanization step. In this production method, the production conditions such as a vulcanization temperature and a vulcanization time are not particularly limited, and general conditions for producing tires are applied as the production conditions.

### [Vulcanizing Machine]

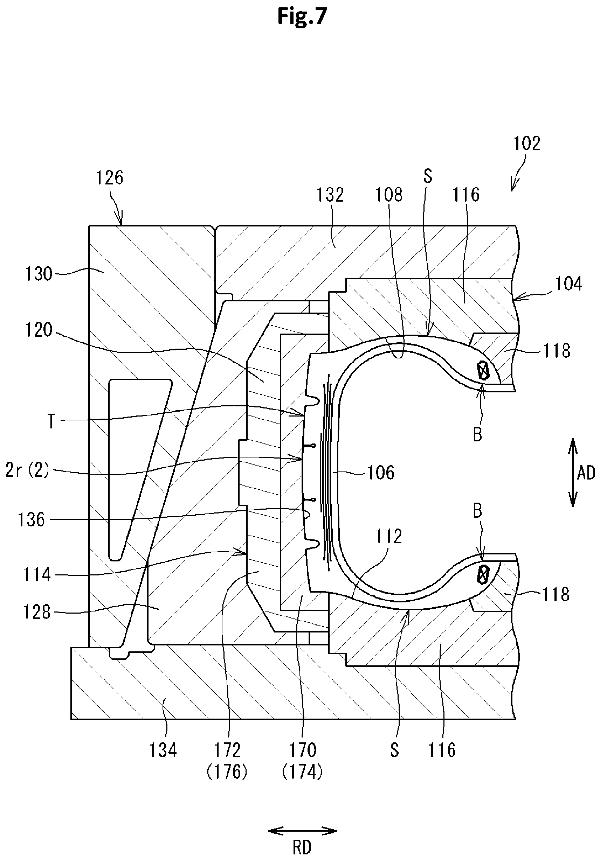

In the vulcanization step, a vulcanizing machine 102 shown in FIG. 7 is used. An outline of the vulcanizing machine 102 will be described below, and for convenience of description, the configurations of the vulcanizing machine 102 and a mold 104 which is set in the vulcanizing machine 102 are represented using the dimensions of the tire 2.

The mold 104 is incorporated into the vulcanizing machine 102. The vulcanizing machine 102 includes the mold 104 and a bladder 106. In the vulcanizing machine 102, the configuration other than the mold 104 is the same as the configuration of a conventional vulcanizing machine. The detailed description of the components other than the mold 104 is omitted.

As shown in FIG. 7, a green tire 2r for the above-described tire 2 is placed in a cavity 108 formed between the mold 104 and the bladder 106. The green tire 2r is pressurized and heated in the cavity 108. Accordingly, the tire 2 having the tread pattern in FIG. 1 is obtained. The mold 104 is a mold for forming the tire 2, that is, a tire mold.

The mold 104 has a cavity surface 112 on an inner surface thereof. The cavity surface 112 comes into contact with the outer surface of the green tire 2r and shapes the outer surface of the tire 2 onto the green tire 2r.

The bladder 106 is located inside the mold 104. The bladder 106 is formed from a crosslinked rubber. The interior of the bladder 106 is filled with a heating medium such as steam. Accordingly, the bladder 106 expands. The bladder 106 shown in FIG. 7 is in a state where the bladder 106 is filled with the heating medium to be expanded. The bladder 106 comes into contact with the inner surface of the green tire 2r and shapes the inner surface of the tire 2 onto the inner surface of the green tire 2r.

The above-described cavity 108 is a space surrounded by the cavity surface 112 and the bladder 106 of the mold 104.

In the production method for a tire, a rigid core (not shown) made of a metal may be used instead of the bladder 106. The rigid core has a toroidal outer surface. This outer surface is approximated to the shape of the inner surface of the tire 2 in a state where the tire 2 is filled with air and the internal pressure of the tire 2 is maintained at 5% of the standardized internal pressure.

### [Mold]

The mold 104 shown in FIG. 7 is a segmented-type mold. The mold 104 includes a tread ring 114, a pair of side plates 116, and a pair of bead rings 118 as components. The above-described cavity surface 112 is formed by combining these components. The mold 104 in FIG. 7 is in a state where these components are combined, in other words, in a state of being closed.

The tread ring 114 forms a tread portion T of the tire 2. Each side plate 116 forms a sidewall portion S of the tire 2. Each bead ring 118 forms a bead portion B of the tire 2.

As described above, the tread portion T includes the tread 4. The tread ring 114 forms the tread 4.

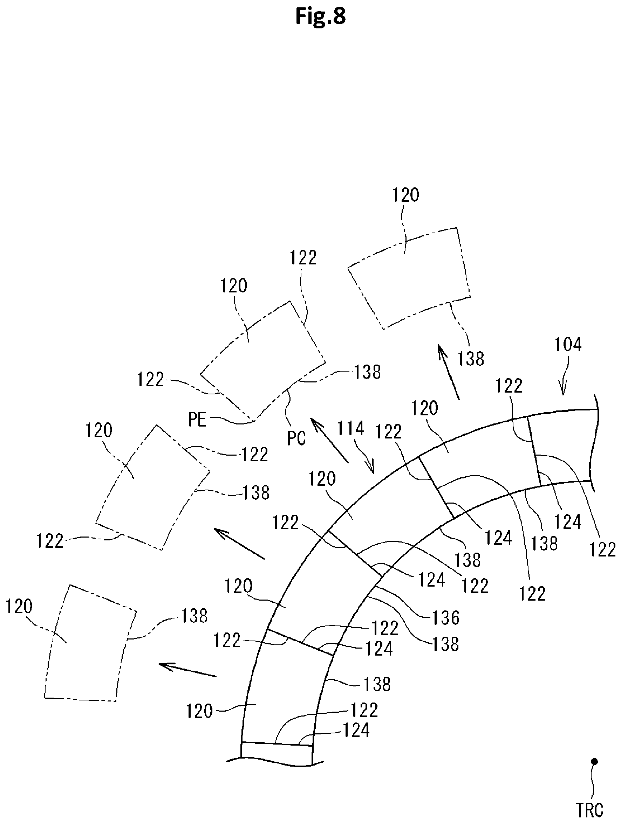

FIG. 8 shows the tread ring 114. In FIG. 8, a position indicated by reference character TRC is the center of the tread ring 114. The center TRC corresponds to the rotation axis of the tire 2.

The tread ring 114 includes a plurality of segments 120. The plurality of segments 120 are aligned in the circumferential direction. The tread ring 114 is configured by combining the plurality of segments 120. Each segment 120 has mating surfaces 122 in close contact with the segments 120 located adjacent thereto. In the tread ring 114, each portion where the segments 120 are in close contact with each other is a division surface 124. The division surface 124 is formed by the mating surfaces 122 of the adjacent segments 120 being brought into close contact with each other.

The tread ring 114 includes a pattern forming portion 136 on an inner circumferential surface thereof. The pattern forming portion 136 shapes the outer circumferential surface of the tread portion T, specifically, the tread surface 6. Accordingly, the tread pattern is formed on the tread 4. The tread ring 114 includes the pattern forming portion 136 for forming the tread pattern.

As described above, each portion where the segments 120 are in close contact with each other is the division surface 124. The division surface 124 traverses the pattern forming portion 136.

The tread ring 114 has a plurality of division surfaces 124. The plurality of division surfaces 124 divide the tread ring 114 into the plurality of segments 120. Accordingly, the pattern forming portion 136 is divided into a plurality of partial forming portions 138.

The plurality of segments 120 each include the partial forming portion 138.

The vulcanizing machine 102 further includes an opening/closing frame 126 which opens and closes the mold 104.

The opening/closing frame 126 includes a plurality of sector shoes 128, an actuator 130, an upper holding plate 132, and a lower holding plate 134.

Each of the plurality of sector shoes 128 is located radially outward of the segment 120. One segment 120 is fixed to one sector shoe 128. The number of sector shoes 128 is equal to the number of segments 120.

The actuator 130 has a ring shape. The actuator 130 is located radially outward of the sector shoes 128. Each sector shoe 128 is slidably coupled to the actuator 130. Although not described in detail, the actuator 130 is movable up and down.

The upper holding plate 132 has a disc shape. The upper side plate 116 and the bead ring 118 are fixed to the upper holding plate 132. Although not described in detail, the upper holding plate 132 is movable up and down.

The lower holding plate 134 has a disc shape. The lower side plate 116 and the bead ring 118 are fixed to the lower holding plate 134. Although not shown, the lower holding plate 134 is fixed to a frame of the vulcanizing machine 102.

In the state shown in FIG. 7, after the vulcanization step is completed, the actuator 130 is raised and each sector shoe 128 is moved radially outward. Since each segment 120 is fixed to the sector shoe 128, the segment 120 moves radially outward as shown in FIG. 8, accordingly. The plurality of segments 120 included in the tread ring 114 are movable in the radial direction. Then, the upper holding plate 132 is raised and the upper side plate 116 and the bead ring 118 are moved upward. Then, the actuator 130 is further raised and the segments 120 are moved upward together with the sector shoes 128. Accordingly, the mold 104 is opened, and the tire 2 is taken out therefrom.

In the vulcanization step, the green tire 2r is placed in the opened mold 104. The green tire 2r is put on the lower side plate 116 and the bead ring 118. The actuator 130 is lowered and the segments 120 are moved downward together with the sector shoes 128. Then, the upper holding plate 132 is lowered and the upper side plate 116 and the bead ring 118 are moved downward. Then, the actuator 130 is further lowered and the segments 120 are moved radially inward together with the sector shoes 128. Accordingly, the mold 104 is closed, and the green tire 2r is pressurized and heated.

In the vulcanization step, the green tire 2r is pressed against the pattern forming portion 136 of the tread ring 114. Accordingly, the tread pattern is formed on the tread 4 of the green tire 2r.

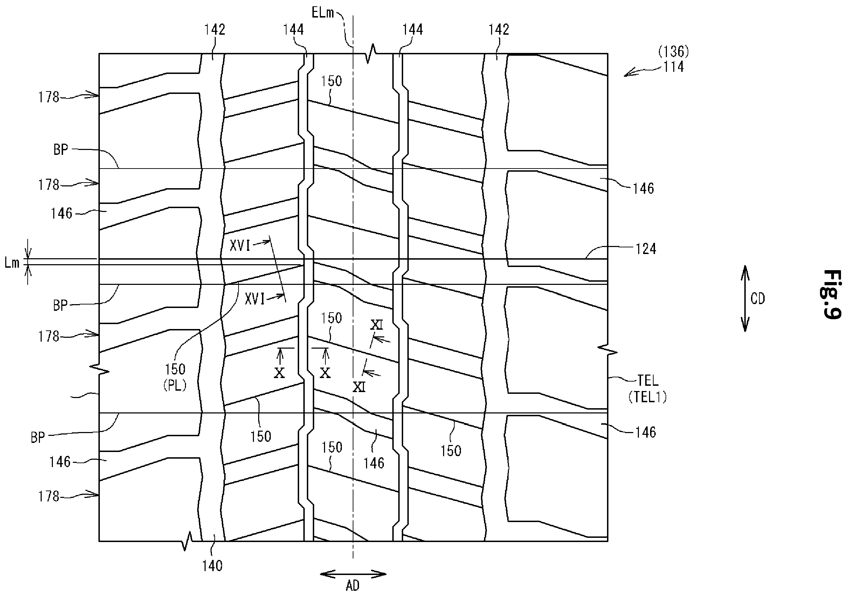

FIG. 9 is a development view showing a part of the pattern forming portion 136. The tread pattern shown in FIG. 1 is formed by the pattern forming portion 136. The pattern forming portion 136 has an uneven pattern corresponding to the tread pattern.

In FIG. 9, an alternate long and short dash line ELm corresponds to the equator plane EL of the tire 2. The alternate long and short dash line ELm is also referred to as corresponding equator plane. A position indicated by reference character TEL is a position corresponding to the end TE of the tread surface 6. The position TEL is also referred to as corresponding tread surface end.

As described above, the grooves 8 are formed on the tread 4 of the tire 2. The grooves 8 are formed by projections 140. The pattern forming portion 136 of the tread ring 114 has the projections 140 for forming the grooves 8. The tread pattern shown in FIG. 1 includes the circumferential main grooves 16, the circumferential narrow grooves 18, the lateral grooves 32, and the lateral sipes 74. The pattern forming portion 136 includes main groove projections 142 for forming the circumferential main grooves 16, narrow groove projections 144 for forming the circumferential narrow grooves 18, lateral groove projections 146 for forming the lateral grooves 32, and lateral blades 150 for forming the lateral sipes 74.

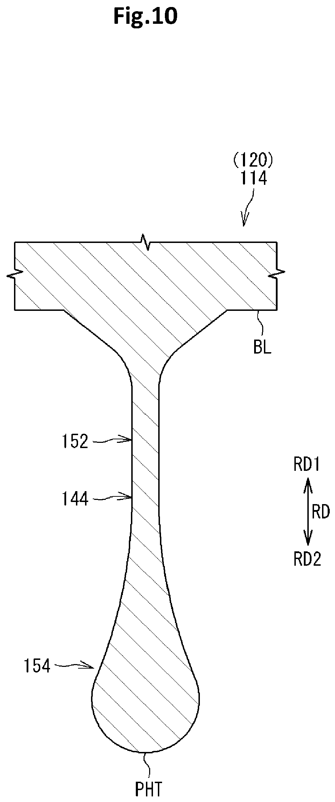

FIG. 10 is a cross-sectional view of FIG. 9 taken along a line X-X. FIG. 10 shows a cross-section of the narrow groove projection 144 taken along a plane perpendicular to the length direction of the narrow groove projection 144. The cross-sectional shape of the narrow groove projection 144 reflects the cross-sectional shape of the circumferential narrow groove 18 shown in FIG. 4.

A surface indicated by reference character BL is a reference surface of the pattern forming portion 136. The reference surface BL is a surface corresponding to a virtual tread surface obtained on the assumption that there are no grooves 8 on the tread 4.

The narrow groove projection 144 projects from the reference surface BL. A distal end PHT of the narrow groove projection 144 corresponds to the groove bottom 18T of the circumferential narrow groove 18. The narrow groove projection 144 includes a base portion 152 and a bulge portion 154. The base portion 152 forms the body portion 54 of the circumferential narrow groove 18. The bulge portion 154 forms the first inflection portion 58 and the wide portion 56 of the circumferential narrow groove 18.

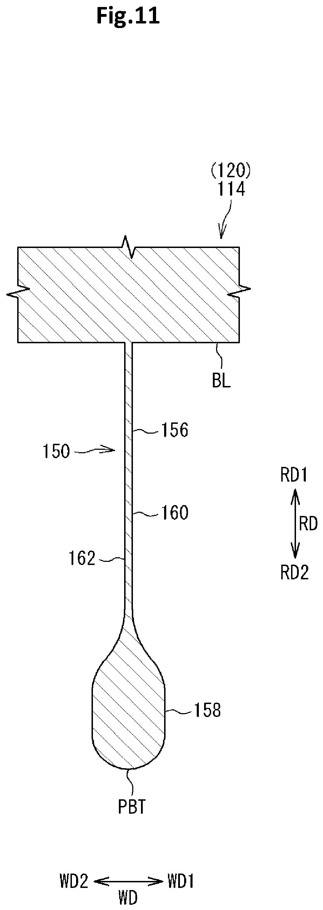

FIG. 11 is a cross-sectional view of FIG. 9 taken along a line XI-XI. FIG. 11 shows a cross-section of the lateral blade 150 taken along a plane perpendicular to the length direction of the lateral blade 150. The cross-sectional shape of the lateral blade 150 reflects the cross-sectional shape of the lateral sipe 74 shown in FIG. 6.

The lateral blade 150 projects from the reference surface BL of the pattern forming portion 136. A distal end PBT of the lateral blade 150 corresponds to the groove bottom 74T of the lateral sipe 74. The lateral blade 150 includes a blade body 156 and a bar-like portion 158. The blade body 156 forms the sipe body 76 of the lateral sipe 74. The bar-like portion 158 forms the second inflection portion 80 and the tubular portion 78 of the lateral sipe 74.

After the green tire 2r is placed in the mold 104, the mold 104 is closed. At this time, the segments 120 move radially inward. Accordingly, the green tire 2r is pressed against the pattern forming portion 136 of the tread ring 114. The main groove projections 142, the narrow groove projections 144, the lateral groove projections 146, and the lateral blades 150 are inserted into the tread 4 of the green tire 2r. After the vulcanization step is completed, the mold 104 is opened in order to release the tire 2 from the mold 104. At this time, as shown in FIG. 8, the segments 120 move radially outward. Accordingly, the narrow groove projections 144 and the lateral blades 150 are pulled out of the tread 4. The tire 2 is released from the mold 104.

In the tire 2, when the tread 4 comes into contact with a road surface and becomes deformed, the pair of wall surfaces 18S of each circumferential narrow groove 18 come into contact with each other at the narrow groove portion 62. The two inner land portions 30 positioned with the circumferential narrow groove 18 located therebetween support each other, and deformation of the inner land portions 30 is suppressed. The tire 2 can reduce rolling resistance.

The sipe body 76 of each lateral sipe 74 can function as an edge component. The tire 2 can maintain good wet performance even when the tread 4 becomes worn.

The maximum width WC2 of the wide portion 56 of the circumferential narrow groove 18 is wider than the minimum width WC1 of the narrow groove portion 62, and the maximum width WL2 of the tubular portion 78 of the lateral sipe 74 is wider than the minimum width WL1 of the sipe body 76. The wide portion 56 of the circumferential narrow groove 18 and the tubular portion 78 of the lateral sipe 74 can contribute to ensuring the groove volume. Even when the tread 4 becomes worn and the sipe body 76 disappears, the exposed tubular portion 78 and wide portion 56 can contribute to maintaining wet performance.

The tire 2 can maintain good wet performance from the new state until replacement of the tire 2 becomes necessary.

The tire 2 can suppress a decrease in wet performance due to wear and can reduce rolling resistance.

As described above, the tread ring 114 of the mold 104 for the tire 2 includes the narrow groove projections 144 for forming the circumferential narrow grooves 18, and the lateral blades 150 for forming the lateral sipes 74. After the vulcanization step is completed, the tire 2 is released from the mold 104. At this time, the narrow groove projections 144 and the lateral blades 150 are pulled out of the tread 4.

As described above, the lateral sipes 74 of the tire 2 are connected to the circumferential narrow grooves 18. The mold 104 has a connection portion between each narrow groove projection 144 and each lateral blade 150, that is, a projection-blade connection portion. When releasing the tire 2 from the mold 104, the rubber is likely to get caught at the projection-blade connection portion. Stress may be concentrated on a portion in contact with this connection portion, and there is a concern that, depending on the degree of the stress concentration, tread chipping may occur.

In the tire 2, the contour of the first inflection portion 58 of each circumferential narrow groove 18 and the contour of the second inflection portion 80 of each lateral sipe 74 are each represented by a single arc. The first inflection portion 58 and the second inflection portion 80 are each formed in a smooth shape. Even though the circumferential narrow groove 18 has the wide portion 56 and the lateral sipe 74 has the tubular portion 78, the resistance force when pulling each narrow groove projection 144 and each lateral blade 150 from the tread 4 is reduced. In particular, since the radius RC1 of the arc representing the contour of the first inflection portion 58 is larger than half the maximum width WC2 of the wide portion 56, the resistance force when pulling each narrow groove projection 144 from the tread 4 is effectively reduced, and the rubber is inhibited from getting caught at the projection-blade connection portion. The tire 2 can suppress occurrence of tread chipping when released from the mold 104.

The tire 2 can suppress occurrence of tread chipping when released from the mold 104 and a decrease in wet performance due to wear and can reduce rolling resistance.

From the viewpoint of effectively suppressing occurrence of tread chipping, the ratio RC1/WC2 of the radius RC1 of the arc representing the contour of the first inflection portion 58 to the maximum width WC2 of the wide portion 56 is preferably not less than 1.5 and not greater than 10.0 and more preferably not less than 2.5 and not greater than 7.5.

The radius RL1 of the arc representing the contour of the second inflection portion 80 of each lateral sipe 74 is larger than half the maximum width WL2 of the tubular portion 78. Accordingly, the resistance force when pulling each lateral blade 150 from the tread 4 is effectively reduced, and the rubber is inhibited from getting caught at the projection-blade connection portion. The tire 2 can suppress occurrence of tread chipping when released from the mold 104. From this viewpoint, the ratio RL1/WL2 of the radius RL1 of the arc representing the contour of the second inflection portion 80 to the maximum width WL2 of the tubular portion 78 is preferably not less than 0.6 and not greater than 5.0 and more preferably not less than 1.0 and not greater than 4.0.

From the viewpoint of effectively suppressing occurrence of tread chipping when releasing the tire 2 from the mold 104, it is more preferable that the radius RC1 of the arc representing the contour of the first inflection portion 58 is larger than half the maximum width WC2 of the wide portion 56, and the radius RL1 of the arc representing the contour of the second inflection portion 80 of each lateral sipe 74 is larger than half the maximum width WL2 of the tubular portion 78.

The ratio WC1/WC2 of the minimum width WC1 of the narrow groove portion 62 to the maximum width WC2 of the wide portion 56 is preferably not less than 0.10 and not greater than 0.35.

When the ratio WC1/WC2 is set to be not less than 0.10, the resistance force when pulling each narrow groove projection 144 from the tread 4 is reduced. The rubber is inhibited from getting caught at the projection-blade connection portion. The tire 2 can reduce stress concentration occurring in the vicinity of the connection portion. The tire 2 can suppress occurrence of tread chipping when released from the mold 104. From this viewpoint, the ratio WC1/WC2 is more preferably not less than 0.15.

When the ratio WC1/WC2 is set to be not greater than 0.35, the groove volume of the wide portion 56 is appropriately maintained. Even when the tread 4 becomes worn and the lateral sipe 74 disappears, the exposed wide portion 56 can contribute to maintaining wet performance. The tire 2 can suppress a decrease in wet performance due to wear. From this viewpoint, the ratio WC1/WC2 is more preferably not greater than 0.30.

The minimum width WC1 of the narrow groove portion 62 is preferably not greater than 2.5 mm. Accordingly, when the tread 4 comes into contact with a road surface and become deformed, the pair of wall surfaces 18S of the circumferential narrow groove 18 can effectively come into contact with each other at the narrow groove portion 62. Deformation of the inner land portion 30 is suppressed. The tire 2 can reduce rolling resistance. From this viewpoint, the minimum width WC1 is more preferably not greater than 2.0 mm. From the viewpoint that water existing between the tread 4 and a wet road surface is effectively drained through the circumferential narrow groove 18, the minimum width WC1 is preferably not less than 1.0 mm.

The ratio D2/D1 of the groove depth D2 of the body portion 54 to the groove depth D1 of the circumferential narrow groove 18 is preferably not less than 0.25 and not greater than 0.70.

When the ratio D2/D1 is set to be not less than 0.25, the groove depth D2 of the body portion 54 is appropriately maintained. When the tread 4 comes into contact with a road surface and becomes deformed, the pair of wall surfaces 18S of the circumferential narrow groove 18 can come into sufficient contact with each other at the narrow groove portion 62. The tire 2 can reduce rolling resistance. From this viewpoint, the ratio D2/D1 is more preferably not less than 0.30.

When the ratio D2/D1 is set to be not greater than 0.70, the resistance force when pulling each narrow groove projection 144 from the tread 4 is reduced. The rubber is inhibited from getting caught at the projection-blade connection portion. Stress concentration occurring in the vicinity of the connection portion is reduced. The tire 2 can suppress occurrence of tread chipping when released from the mold 104. From this viewpoint, the ratio D2/D1 is more preferably not greater than 0.65.

The ratio D4/D1 of the groove depth D4 of the funnel portion 60 to the groove depth D1 of the circumferential narrow groove 18 is preferably not less than 0.12 and not greater than 0.14.

When the ratio D4/D1 is set to be not less than 0.12, the funnel portion 60 can effectively suppress concentration of strain at the groove opening 18M of the circumferential narrow groove 18. Occurrence of damage such as chipping to the edge of the inner land portions 30 is effectively suppressed. The tire 2 has good durability.

When the ratio D4/D 1 is set to be not greater than 0.14, the length of the narrow groove portion 62 is appropriately maintained. When the tread 4 comes into contact with a road surface and becomes deformed, the pair of wall surfaces 18S of the circumferential narrow groove 18 can come into sufficient contact with each other at the narrow groove portion 62. The tire 2 can reduce rolling resistance.

From the viewpoint of being able to stably produce the tire 2 having low rolling resistance and good durability while suppressing occurrence of tread chipping, it is more preferable that the ratio D2/D1 is not less than 0.25 and not greater than 0.70 and the ratio D4/D1 is not less than 0.12 and not greater than 0.14.

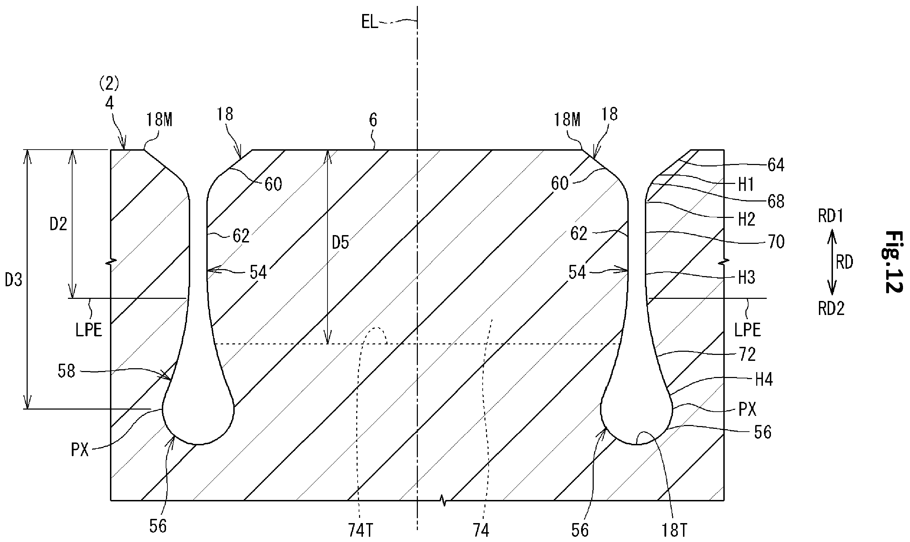

FIG. 12 shows a part of a cross-section taken along a line XII-XII in FIG. 2. FIG. 12 shows a cross-section of a portion at the equator plane EL of the tire 2. In FIG. 12, a length indicated by a double-headed arrow D5 is the groove depth of each lateral sipe 74.

The groove depth D5 of the lateral sipe 74 is deeper than the groove depth D2 of the body portion 54. Accordingly, the lateral sipe 74 can function as an edge component from the initial stage to the middle stage of wear. The tire 2 can maintain good wet performance. The groove depth D5 of the lateral sipe 74 is shallower than the maximum width groove depth D3 of the wide portion 56. Accordingly, the influence of the lateral sipe 74 on the stiffness of the tread 4 is suppressed. The body portion 54 of each circumferential narrow groove 18 (specifically, each narrow groove portion 62) can effectively contribute to suppressing deformation of the inner land portions 30. The tire 2 can reduce rolling resistance. Furthermore, the length of each projection-blade connection portion in the mold 104 is set to an appropriate length. When each narrow groove projection 144 and each lateral blade 150 are pulled out of the tread 4, the rubber is inhibited from getting caught at the projection-blade connection portion. Stress concentration occurring in the vicinity of the connection portion is reduced. The tire 2 can suppress occurrence of tread chipping when released from the mold 104.

The mold 104 can suppress occurrence of tread chipping when releasing the tire 2 having the circumferential narrow grooves 18 and the lateral sipes 74 which can contribute to reducing rolling resistance and suppressing a decrease in wet performance due to wear. From this viewpoint, the groove depth D2 of the body portion 54 of the circumferential narrow groove 18, the maximum width groove depth D3 of the wide portion 56, and the groove depth D5 of the lateral sipe 74 satisfy the following formula. Formula: $D 2 < D 5 < D 3$

In the case where the groove depth D2 of the body portion 54, the maximum width groove depth D3 of the wide portion 56, and the groove depth D5 of the lateral sipe 74 satisfy the above formula, from the viewpoint that occurrence of tread chipping when releasing the tire 2 from the mold 104 is suppressed and the tire 2 can suppress a decrease in wet performance due to wear and can reduce rolling resistance, it is further preferable that the ratio D2/D5 of the groove depth D2 of the body portion 54 to the groove depth D5 of the lateral sipe 74 is not less than 0.40 and not greater than 0.90 and the ratio D3/D5 of the maximum width groove depth D3 of the wide portion 56 to the groove depth D5 of the lateral sipe 74 is not less than 1.05 and not greater than 2.00.

The ratio (D6/D5) of the groove depth D6 of the sipe body 76 of the lateral sipe 74 to the groove depth D5 of the lateral sipe 74 is preferably not less than 0.55 and not greater than 0.75.

When the ratio (D6/D5) is set to be not less than 0.55, the influence of the tubular portion 78 on the stiffness of the inner block 34u is suppressed. Deformation of the inner block 34u is suppressed. The tire 2 can reduce rolling resistance. The tubular portion 78 can be exposed at an appropriate timing, so that the tire 2 can suppress a decrease in wet performance due to wear. From this viewpoint, the ratio (D6/D5) is more preferably not less than 0.60.

When the ratio (D6/D5) is set to be not greater than 0.75, the groove volume of the tubular portion 78 is appropriately maintained. The tire 2 can suppress a decrease in wet performance due to wear. From this viewpoint, the ratio (D6/D5) is more preferably not greater than 0.70.

The ratio WL2/WL1 of the maximum width WL2 of the tubular portion 78 to the minimum width WL1 of the sipe body 76 is preferably not less than 4 and more preferably not less than 5. Accordingly, the tubular portion 78 can contribute to maintaining wet performance. The ratio WL2/WL1 is preferably not greater than 13 and more preferably not greater than 12. Accordingly, the groove volume of the tubular portion 78 is appropriately maintained. The influence of the tubular portion 78 on the stiffness of the inner block 34u is suppressed.

The maximum width WC2 of the wide portion 56 is preferably wider than the maximum width WL2 of the tubular portion 78. Accordingly, in the middle stage of wear in which the tubular portion 78 is exposed, and in the final stage of wear in which the wide portion 56 is exposed, the groove volume is appropriately maintained, so that the tire 2 can effectively suppress a decrease in wet performance due to wear. From this viewpoint, the ratio WC2/WL2 of the maximum width WC2 of the wide portion 56 to the maximum width WL2 of the tubular portion 78 is preferably not less than 1.2 and more preferably not less than 1.6. From the viewpoint of appropriately suppressing bulge of the wide portion 56 and suppressing occurrence of tread chipping due to the rubber getting caught at the projection-blade connection portion when pulling each narrow groove projection 144 and each lateral blade 150 from the tread 4, the ratio WC2/WL2 is preferably not greater than 3.2 and more preferably not greater than 2.8.

In FIG. 2, an angle β represents an angle of the length direction of the lateral sipe 74 with respect to the axial direction. In the present invention, the angle β is an inclination angle of the lateral sipe 74.

In the tire 2, the inclination angle β of the lateral sipe 74 is preferably not less than -35 degrees and not greater than 35 degrees. In this case, when each narrow groove projection 144 and each lateral blade 150 are pulled out of the tread 4, stress concentration occurring in the vicinity of the projection-blade connection portion is suppressed. The tire 2 can suppress occurrence of tread chipping when released from the mold 104. From this viewpoint, the inclination angle β is more preferably not less than -25 degrees and not greater than 25 degrees.

Each narrow groove projection 144 and each lateral blade 150 provided on each segment 120 included in the tread ring 114 project inward. As described above, when releasing the tire 2 from the mold 104, each segment 120 is moved radially outward. The narrow groove projections 144 and the lateral blades 150 move together with the segments 120. Each segment 120 has a predetermined length in the circumferential direction. A misalignment occurs between the projection directions and the movement directions of the narrow groove projections 144 and the lateral blades 150.

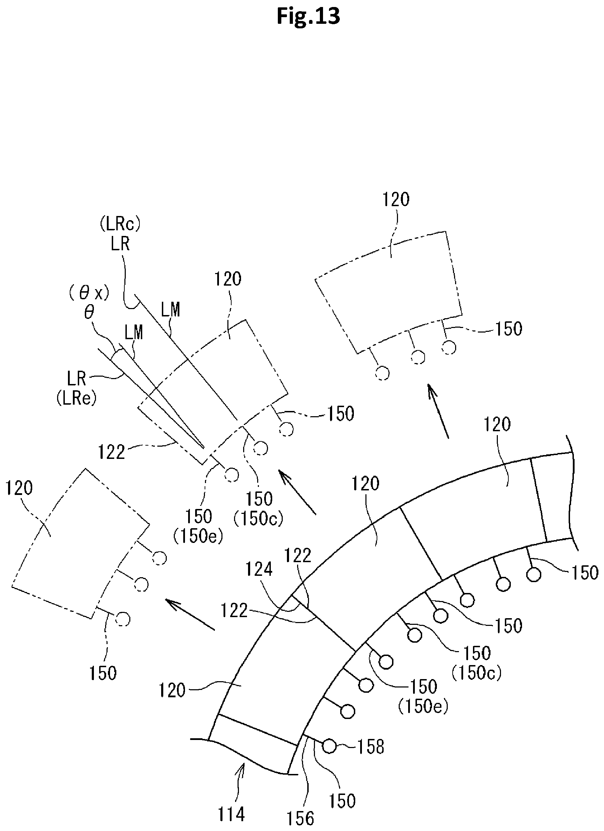

FIG. 13 illustrates the relationship between the projection directions of the lateral blades 150 and the movement directions of the segments 120. FIG. 13 schematically represents a cross-section of the tread ring 114 taken along the corresponding equator plane ELm.

In FIG. 13, the direction of a solid line LM coincides with the movement direction of the segment 120. The direction of a solid line LR represents the direction of the lateral blade 150 provided on the segment 120, specifically, the direction of the blade body 156. A solid line LRc represents the direction of a lateral blade 150c located at the center in the circumferential direction of the segment 120. A solid line LRe represents the direction of a lateral blade 150e located at an end portion in the circumferential direction of the segment 120, that is, near the division surface 124 of the tread ring 114.

As shown in FIG. 13, at the center in the circumferential direction of the segment 120, the direction LRc of the lateral blade 150c coincides with the movement direction LM of the segment 120. The direction of the lateral blade 150e near the division surface 124 does not coincide with the movement direction LM of the segment 120. At a position closer to the division surface 124, the direction of the lateral blade 150 is misaligned more with respect to the movement direction LM of the segment 120. This misalignment increases the resistance force when pulling each narrow groove projection 144 and each lateral blade 150 from the tire 2.

The stress acting on the land portion 20 when releasing the tire 2 from the mold 104 is higher at a position closer to the division surface 124. Near the division surface 124, the stress acting on the land portion 20 may be concentrated in the vicinity of the projection-blade connection portion, and there is a concern that, depending on the degree of the stress concentration, tread chipping may occur.

In FIG. 13, an angle θ is an angle between the solid line LM and the solid line LR. The angle θ is an angle of the lateral blade 150 with respect to the movement direction of the segment 120. At the center in the circumferential direction of the segment 120, the angle θ is 0 degrees, but the angle θ increases with decreasing the distance to the division surface 124. In FIG. 13, an angle θx represents an angle of the lateral blade 150 closest to the division surface 124 among all lateral blades 150 provided on each segment 120, with respect to the movement direction of the segment 120.

In the production method for a tire, in each segment 120, the angle θx of the lateral blade 150 closest to the division surface 124, with respect to the movement direction of the segment 120, is preferably not greater than 15 degrees.

In a conventional mold, the number of segments included in the tread ring, that is, the number of divisions of the tread ring, is set to 8 to 10. In the case where the number of divisions of the tread ring 114 is set as in the conventional mold, the angle of the lateral blade 150 closest to the division surface 124, with respect to the movement direction of the segment 120, is 18.0 to 22.5 degrees. In contrast, in the mold 104 used in this production method, the angle θx of the lateral blade 150 closest to the division surface 124, with respect to the movement direction of the segment 120, is set to be not greater than 15 degrees. The deviation between the direction of the lateral blade 150 and the movement direction LM of the segment 120 is reduced. In this production method, the resistance force when pulling each narrow groove projection 144 and each lateral blade 150 from the tire 2 is reduced. This production method can inhibit the rubber from getting caught at the projection-blade connection portion. Stress concentration occurring in the vicinity of the projection-blade connection portion is reduced. This production method can suppress occurrence of tread chipping when releasing the tire 2. From this viewpoint, in each segment 120 included in the tread ring 114, the angle θx of the lateral blade 150 closest to the division surface 124, with respect to the movement direction of the segment 120, is preferably not greater than 15 degrees.

The number of segments 120 included in the tread ring 114 of the mold 104 is not less than 17. Accordingly, in this production method, the above-described angle θx can be set to be not greater than 10.6 degrees. In this production method, since the angle θx can be set to be further smaller, the deviation between the direction of the lateral blade 150 and the movement direction LM of the segment 120 can be made further smaller. This production method can reduce stress concentration occurring in the vicinity of the projection-blade connection portion due to the deviation between the projection direction of the lateral blade 150 and the movement direction of the segment 120. This production method can suppress occurrence of tread chipping when releasing the tire 2. From this viewpoint, the number of segments 120 included in the tread ring 114 is preferably not less than 17 and more preferably not less than 19. From the viewpoint of easy maintenance of the segments 120, the number of segments 120 is preferably not greater than 23.

As shown in FIG. 7, each segment 120 included in the tread ring 114 includes a body 170 and a holder 172 holding the body 170.

As described above, the tread ring 114 is configured by combining the plurality of segments 120. Accordingly, a body ring 174 composed of a plurality of bodies 170 aligned in the circumferential direction and a holder ring 176 composed of a plurality of holders 172 aligned in the circumferential direction, are configured. The body ring 174 has the above-described pattern forming portion 136.

As shown in FIG. 9, the uneven pattern of the pattern forming portion 136 is divided into a plurality of pitch patterns 178 aligned in the circumferential direction. In FIG. 9, a solid line BP extending in the axial direction is the boundary between two adjacent pitch patterns 178.

The uneven pattern of the pattern forming portion 136 for shaping the tread pattern is formed by combining the plurality of pitch patterns 178. The pitch pattern means a unit pattern repeated in the circumferential direction.

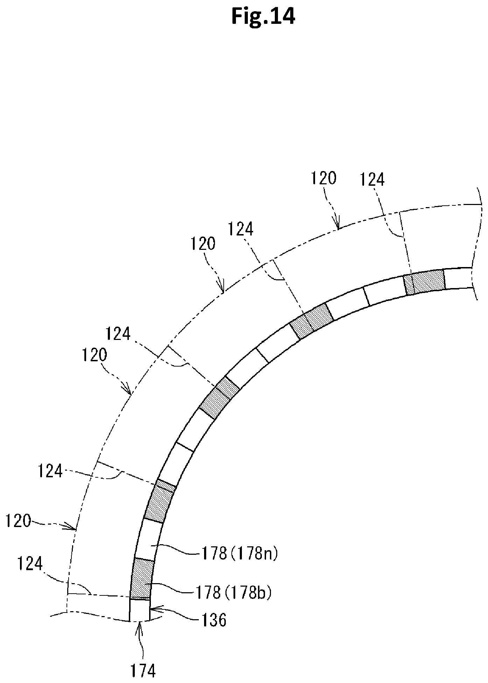

As described above, the body ring 174 has the pattern forming portion 136. The body ring 174 has the plurality of pitch patterns 178 aligned in the circumferential direction. As shown in FIG. 14, the plurality of pitch patterns 178 included in the body ring 174 include pitch patterns 178 which the division surfaces 124 of the tread ring 114 intersect (hereinafter referred to as boundary pitch patterns 178b), and pitch patterns 178 which no division surface 124 intersects (hereinafter referred to as normal pitch patterns 178n).

Each division surface 124 traverses the boundary pitch pattern 178b which is a part of the pattern forming portion 136. As shown in FIG. 9, each division surface 124 of the mold 104 is represented by a straight line extending in the axial direction.

When the lateral blade 150 intersects the division surface 124, the lateral blade 150 is composed of two piece blades. In this case, the stiffness of the entire lateral blade 150 is decreased.

On the lateral blade 150 located near the division surface 124, a peculiar force tends to act, so that damage such as breaking or bending may occur in the lateral blade 150 in addition to tread chipping. Therefore, the division surface 124 is located away from the lateral blade 150 such that the division surface 124 does not intersect the lateral blade 150.

In FIG. 9, a length indicated by a double-headed arrow Lm is the shortest distance in the circumferential direction from the lateral blade 150 closest to the division surface 124, to the division surface 124. The shortest distance Lm in the circumferential direction is obtained by measuring the distance in the circumferential direction from the blade body 156 of the lateral blade 150 to the division surface 124.

The radius RC1 of the arc representing the contour of the first inflection portion 58 of the circumferential narrow groove 18 is larger than the shortest distance Lm in the circumferential direction. Accordingly, the resistance force when pulling each narrow groove projection 144 from the tread 4 is reduced. The rubber is inhibited from getting caught at the projection-blade connection portion. Stress concentration occurring in the vicinity of the connection portion is reduced. The tire 2 can suppress occurrence of tread chipping or blade damage when released from the mold 104. From this viewpoint, it is preferable that the radius RC1 of the arc representing the contour of the first inflection portion 58 is larger than the shortest distance Lm in the circumferential direction. Specifically, the ratio RC1/Lm of the radius RC1 of the arc representing the contour of the first inflection portion 58 to the shortest distance Lm in the circumferential direction is preferably not less than 1.1 and more preferably not less than 1.5. From the viewpoint that the groove volume of the wide portion 56 is appropriately maintained and the wide portion 56 can effectively contribute to maintaining wet performance, the ratio RC1/Lm is preferably not greater than 8.0 and more preferably not greater than 7.0.

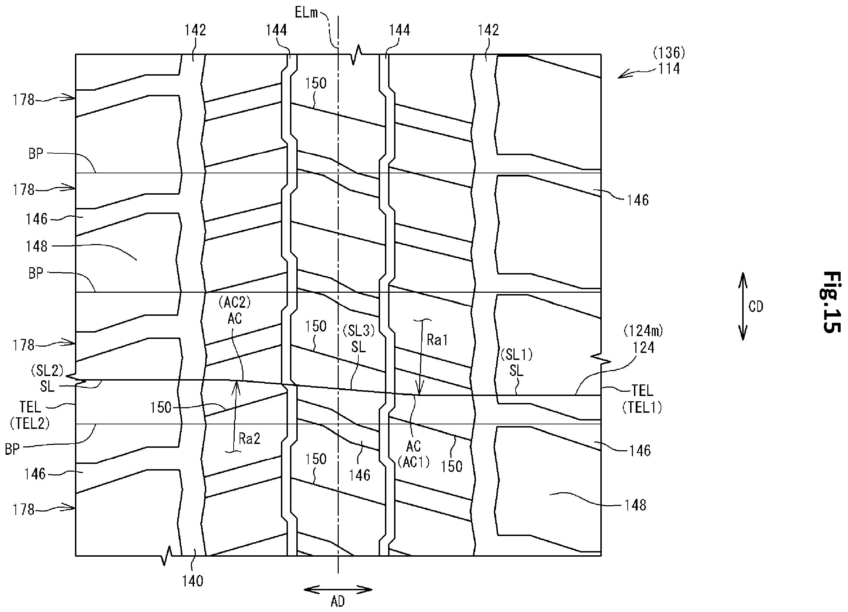

FIG. 15 is a development view showing a modification of the division surface 124 (hereinafter referred to as division surface 124m). The uneven pattern of a pattern forming portion 136 shown in FIG. 15 is the same as the uneven pattern of the pattern forming portion 136 shown in FIG. 9.

The contour of the division surface 124m shown in FIG. 15 includes three straight lines SL and two arcs AC. The three straight lines SL are aligned in the axial direction.

The three straight lines SL are a first straight line SL1 including a first corresponding tread surface end TEL1, a second straight line SL2 including a second corresponding tread surface end TEL2, and a third straight line SL3 located between the first straight line SL1 and the second straight line SL2. The first straight line SL1 and the second straight line SL2 extend in the axial direction. The third straight line SL3 is inclined with respect to the axial direction.

Each of the two arcs AC connects two adjacent straight lines SL. The two arcs AC are a first arc AC1 connecting the first straight line SL1 and the third straight line SL3, and a second arc AC2 connecting the second straight line SL2 and the third straight line SL3. An arrow Ra1 represents the radius of the first arc AC1, and an arrow Ra2 represents the radius of the second arc AC2.

As described above, the deviation between the projection direction of the lateral blade 150 and the movement direction of the segment 120 is the maximum at an end portion in the circumferential direction of the segment 120. Depending on the placement of the lateral blade 150, the division surface 124 may be close to the lateral blade 150. In this case, when releasing the tire 2 from the mold 104, stress may be concentrated on the lateral blade 150 close to the division surface 124, and depending on the degree of the stress concentration, tread chipping or blade damage may occur.

However, when the contour of the division surface 124 includes at least one arc, the division surface 124 can be located away from the lateral blade 150, like the division surface 124m shown in FIG. 14. Accordingly, stress concentration on the lateral blade 150 close to the division surface 124 is suppressed. The mold 104 can suppress occurrence of tread chipping or blade damage when releasing the tire 2. From this viewpoint, it is preferable that the contour of the division surface 124 includes at least one arc. In this case, it is more preferable that the radius of the arc is not less than 5 mm.

As shown in FIG. 9, each lateral blade 150 extends substantially in the axial direction. In FIG. 11 showing the cross-section of the lateral blade 150, a direction indicated by an arrow WD1 is a direction toward the division surface 124, and is referred to as circumferential end portion side of the segment 120. A direction indicated by an arrow WD2 is a direction toward the center in the circumferential direction of the segment 120, and is referred to as circumferential center side of the segment 120.

The lateral blade 150 has a first side surface 160 on the end portion side, and a second side surface 162 on the center side. The distal end PBT of the lateral blade 150 is the boundary between the first side surface 160 and the second side surface 162. The first side surface 160 and the second side surface 162 form the groove wall 74W of the lateral sipe 74.

As described above, on the rubber that is in contact with the lateral blade 150 located near the division surface 124 (e.g., the lateral blade indicated by reference character PL in FIG. 9), a peculiar force tends to act when pulling this lateral blade 150 from the tread 4. A greater force acts on the rubber that is in contact with the second side surface 162 on the center side, than on the rubber that is in contact with the first side surface 160 on the end portion side. There is a concern that chipping is likely to occur at the rubber that is in contact with the second side surface 162 on the center side. The present inventor has also examined the shape of the lateral blade 150 located near the division surface 124 in order to suppress occurrence of tread chipping when releasing the tire 2 from the mold 104.

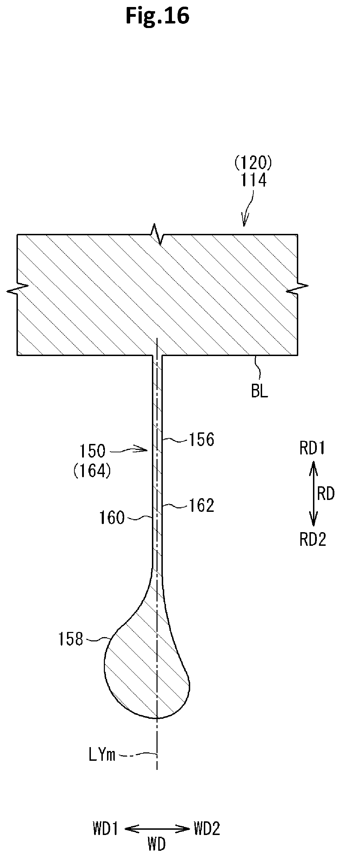

FIG. 16 is a cross-sectional view of FIG. 9 taken along a line XVI-XVI. FIG. 16 shows a cross-section of the lateral blade 150 closest to the division surface 124 among the lateral blades 150 provided on the segment 120. This lateral blade 150 also includes a blade body 156 and a bar-like portion 158.

In FIG. 16, an alternate long and short dash line LYm is a minimum width center line of the blade body 156. The minimum width center line LYm is represented by a line passing through the center of the minimum width of the blade body 156 and extending in the projection direction of the blade body 156.

The lateral blade 150 shown in FIG. 16 has a cross-sectional shape which is asymmetrical with respect to the minimum width center line LYm of the blade body 156. The lateral blade 150 having an asymmetrical cross-sectional shape and closest to the division surface 124 is also referred to as deformed lateral blade 164 in order to distinguish this lateral blade 150 from the lateral blade 150 shown in FIG. 11.

The components of the deformed lateral blade 164 corresponding to the components of the lateral blade 150 in FIG. 11 are designated by the same reference characters as the reference characters for the components of the lateral blade 150, and the description thereof is omitted, unless otherwise specified.

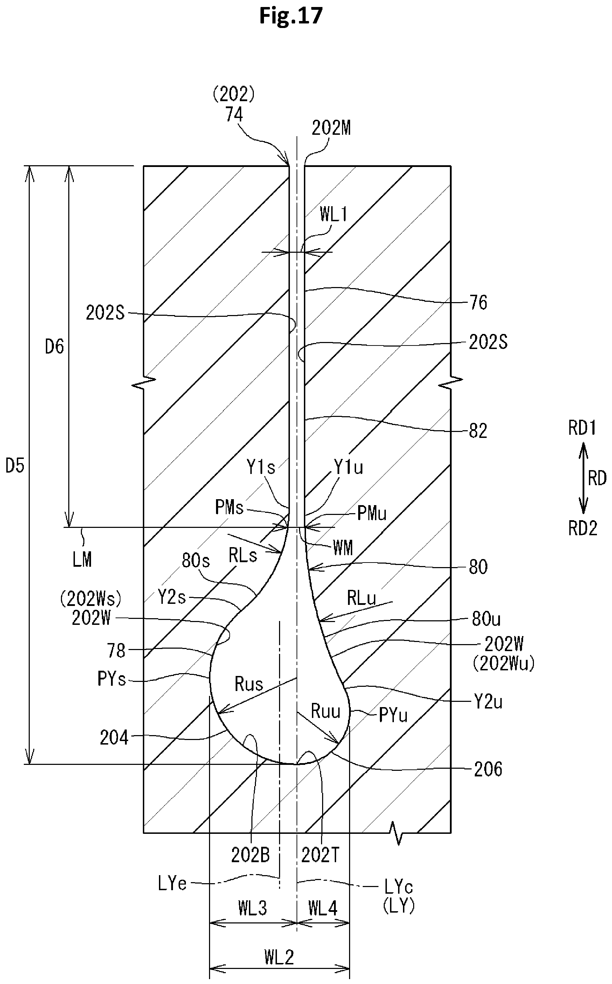

FIG. 17 is a cross-sectional view of a lateral sipe 74 formed by the deformed lateral blade 164 shown in FIG. 16 (hereinafter referred to as deformed lateral sipe 202). FIG. 17 shows a cross-section of the deformed lateral sipe 202 taken along a plane perpendicular to the length direction of the deformed lateral sipe 202.

The deformed lateral sipe 202 will be described below, and the components of the deformed lateral sipe 202 corresponding to the components of the lateral sipe 74 in FIG. 6 are designated by the same reference characters as the reference characters for the components of the lateral sipe 74, and the description thereof is omitted, unless otherwise specified.

The deformed lateral sipe 202 also includes a pair of groove walls 202W connecting a groove opening 202M and a groove bottom 202T. Of the pair of groove walls 202W of the deformed lateral sipe 202 shown in FIG. 17, the groove wall 202W located on the left side of the groove bottom 202T is formed by the first side surface 160 of the deformed lateral blade 164. The groove wall 202W formed by the first side surface 160 is also referred to as outer groove wall 202Ws. The groove wall 202W located on the right side of the groove bottom 202T is formed by the second side surface 162 of the deformed lateral blade 164. The groove wall 202W formed by the second side surface 162 is also referred to as inner groove wall 202Wu.

The deformed lateral sipe 202 includes the outer groove wall 202Ws formed by the first side surface 160 on the division surface 124 side of the deformed lateral blade 164, and the inner groove wall 202Wu formed by the second side surface 162 located on the side opposite to the first side surface 160 of the deformed lateral blade 164.

Similar to the lateral sipe 74 shown in FIG. 6, the deformed lateral sipe 202 also includes a sipe body 76, a tubular portion 78, and a second inflection portion 80.

The sipe body 76 of the deformed lateral sipe 202 includes an upper straight portion 82 extending inward in a straight manner from the groove opening 202M. The sipe body 76 has a minimum width WL1 at the upper straight portion 82. The upper straight portion 82 has a groove width WL1 which is uniform in the depth direction thereof.

In FIG. 17, a position indicated by reference character Y1s is the inner end of the upper straight portion 82 in the outer groove wall 202Ws. A position indicated by reference character Y1u is the inner end of the upper straight portion 82 in the inner groove wall 202Wu.

In FIG. 17, an alternate long and short dash line LYc is a minimum width center line of the sipe body 76. The minimum width center line LYc passes through the center of the minimum width WL1 and extends in the depth direction of the deformed lateral sipe 202. The minimum width center line LYc passes through the groove bottom 202T of the deformed lateral sipe 202. The minimum width center line LYc corresponds to the center line LY of the lateral sipe 74 shown in FIG. 6.

The tubular portion 78 of the deformed lateral sipe 202 includes the groove bottom 202T. The tubular portion 78 is curved so as to bulge outward from the inner side thereof.

In FIG. 17, a double-headed arrow WL2 represents the maximum width of the tubular portion 78. The maximum width WL2 is represented as the distance, between a reference point PYs on the outer groove wall 202Ws and a reference point PYu on the inner groove wall 202Wu, measured along a line orthogonal to the minimum width center line LYc, for example.

The reference point PYs is a position in the tubular portion 78 at which the distance from the minimum width center line LYc to the outer groove wall 202Ws is the largest. In FIG. 17, the distance from the minimum width center line LYc to the position PYs is represented by a double-headed arrow WL3.

The reference point PYu is a position in the tubular portion 78 at which the distance from the minimum width center line LYc to the inner groove wall 202Wu is the largest. In FIG. 17, the distance from the minimum width center line LYc to the reference point PYu is represented by a double-headed arrow WL4.

The maximum width WL2 of the tubular portion 78 of the deformed lateral sipe 202 is represented as the sum of the distance WL3 and the distance WL4.

The second inflection portion 80 connects the sipe body 76 and the tubular portion 78. The portion of the deformed lateral sipe 202 from the groove opening 202M to the boundary line LM is the sipe body 76.

In FIG. 17, a position indicated by reference character PMs is the point of intersection of the boundary line LM and the outer groove wall 202Ws. The position PMs is the boundary between the sipe body 76 and the second inflection portion 80 at the outer groove wall 202Ws. A position indicated by reference character PMu is the point of intersection of the boundary line LM and the inner groove wall 202Wu. The position PMu is the boundary between the sipe body 76 and the second inflection portion 80 at the inner groove wall 202Wu.

A position indicated by reference character Y2s is the boundary between the second inflection portion 80 and the tubular portion 78 at the outer groove wall 202Ws. A position indicated by reference character Y2u is the boundary between the second inflection portion 80 and the tubular portion 78 at the inner groove wall 202Wu. The portion from the boundary Y2s through the groove bottom 202T to the boundary Y2u is the tubular portion 78.

In the tire 2, the contour of the portion of the tubular portion 78 from the groove bottom 202T to the boundary Y2s is represented by an arc. In FIG. 17, an arrow Rus indicates the radius of this arc. Of the tubular portion 78, the portion represented by the arc having the radius Rus is also referred to as outer lower arc portion 204. The contour of the portion from the groove bottom 202T to the boundary Y2u is also represented by an arc. In FIG. 17, an arrow Ruu indicates the radius of this arc. Of the tubular portion 78, the portion represented by the arc having the radius Ruu is also referred to as inner lower arc portion 206.

The center of the arc representing the contour of the outer lower arc portion 204 and the center of the arc representing the contour of the inner lower arc portion 206 are located on the minimum width center line LYc. The radius Rus of the arc representing the contour of the outer lower arc portion 204 is equal to the above-described distance WL3, and the radius Ruu of the arc representing the contour of the inner lower arc portion 206 is equal to the above-described distance WL4.

The portion of the outer groove wall 202Ws from the boundary PMs to the boundary Y2s is a portion corresponding to the second inflection portion 80 in the outer groove wall 202Ws (hereinafter referred to as outer second inflection portion-corresponding portion 80s).

The outer second inflection portion-corresponding portion 80s is curved so as to be recessed inward from the outer side thereof. Specifically, in the cross-section of the deformed lateral sipe 202, the contour of the outer second inflection portion-corresponding portion 80s is represented by an arc. In FIG. 17, an arrow RLs indicates the radius of the arc representing the contour of the outer second inflection portion-corresponding portion 80s.

In the tire 2, the portion represented by the arc having the radius RLs is also referred to as outer boundary arc portion 208. The arc representing the contour of the outer boundary arc portion 208 is tangent to a straight line representing the contour of the upper straight portion 82 in the outer groove wall 202Ws, at the position Y1s. The position Y1s is the boundary between the upper straight portion 82 and the outer boundary arc portion 208. The boundary Y1s is located radially outward of the boundary PMs between the sipe body 76 and the second inflection portion 80 in the outer groove wall 202Ws. The boundary Y1s may coincide with the boundary PMs.

The arc representing the contour of the outer boundary arc portion 208 is tangent to the arc representing the contour of the outer lower arc portion 204, at the position Y2s. The position Y2s is the boundary between the second inflection portion 80 and the tubular portion 78 in the outer groove wall 202Ws and is also the boundary between the outer boundary arc portion 208 and the outer lower arc portion 204.

The portion of the inner groove wall 202Wu from the boundary PMu to the boundary Y2u is a portion corresponding to the second inflection portion 80 in the inner groove wall 202Wu (hereinafter referred to as inner second inflection portion-corresponding portion 80u).

The inner second inflection portion-corresponding portion 80u is curved so as to be recessed inward from the outer side thereof. Specifically, in the cross-section of the deformed lateral sipe 74, the contour of the inner second inflection portion-corresponding portion 80u is represented by an arc. In FIG. 17, an arrow RLu indicates the radius of the arc representing the contour of the inner second inflection portion-corresponding portion 80u.

In the tire 2, the portion represented by the arc having the radius RLu is also referred to as inner boundary arc portion 210. The arc representing the contour of the inner boundary arc portion 210 is tangent to a straight line representing the contour of the upper straight portion 82 in the inner groove wall 202Wu, at the position Y1u. The position Y1u is the boundary between the upper straight portion 82 and the inner boundary arc portion 210. The boundary Y1u is located radially outward of the boundary PMu between the sipe body 76 and the second inflection portion 80 in the inner groove wall 202Wu. The boundary Y1u may coincide with the boundary PMu.

The arc representing the contour of the inner boundary arc portion 210 is tangent to the arc representing the contour of the inner lower arc portion 206, at the position Y2u. The position Y2u is the boundary between the second inflection portion 80 and the tubular portion 78 in the inner groove wall 202Wu and is also the boundary between the inner boundary arc portion 210 and the inner lower arc portion 206.

The deformed lateral sipe 202 has a cross-sectional shape which is asymmetrical with respect to the minimum width center line LYc of the sipe body 76. A maximum width center line LYe of the tubular portion 78 is located on the outer groove wall 202Ws side with respect to the minimum width center line LYc of the sipe body 76. In other words, the distance WL4 from the minimum width center line LYc to the position PYu in the tubular portion 78 at which the distance from the minimum width center line LYc to the inner groove wall 202Wu is the largest is shorter than the distance WL3 from the minimum width center line LYc to the position PYs in the tubular portion 78 at which the distance from the minimum width center line LYc to the outer groove wall 202Ws is the largest.

Accordingly, the tire 2 allows the amount of inward projection of the tubular portion 78, in other words, the amount of projection of the segment 120 toward the circumferential center side, to be reduced while maintaining the maximum width WL2 of the tubular portion 78.

By applying the deformed lateral blade 164 for forming the deformed lateral sipe 202 to the lateral blade 150 located near the division surface 124, the force acting on the rubber that is in contact with the second side surface 162 located on the center side of the segment 120, that is, on the side opposite to the division surface 124 side, when releasing the tire 2 from the mold 104, is reduced. The tire 2 can suppress occurrence of tread chipping when released from the mold 104. Since the maximum width WL2 of the tubular portion 78 is maintained, the influence of the asymmetrical cross-sectional shape of the lateral sipe 74 on wet performance is also suppressed. From this viewpoint, it is preferable that the lateral sipe 74 formed by the lateral blade 150 closest to the division surface 124 has a cross-sectional shape which is asymmetrical with respect to the minimum width center line LYc of the sipe body 76, this lateral sipe 74 includes the outer groove wall 202Ws formed by the first side surface 160 on the division surface 124 side of the lateral blade 150, and the inner groove wall 202Wu formed by the second side surface 162 located on the side opposite to the first side surface 160, and the maximum width center line LYe of the tubular portion 78 is located on the outer groove wall 202Ws side with respect to the minimum width center line LYc of the sipe body 76.

From the viewpoint of being able to effectively suppress occurrence of tread chipping when releasing the tire 2 from the mold 104 while maintaining good wet performance, the ratio WL3/WL4 of the distance WL3 from the minimum width center line LYc to the position PYs in the tubular portion 78 at which the distance from the minimum width center line LYc to the outer groove wall 202Ws is the largest, to the distance WL4 from the minimum width center line LYc to the position PYu in the tubular portion 78 at which the distance from the minimum width center line LYc to the inner groove wall 202Wu is the largest, is preferably not less than 1.2 and not greater than 3.3 and more preferably not less than 1.5 and not greater than 3.0.

The radius RLu of the arc representing the contour of the inner second inflection portion-corresponding portion 80u is larger than the radius RLs of the arc representing the contour of the outer second inflection portion-corresponding portion 80s. Accordingly, the force acting on the rubber that is in contact with the second side surface 162 located on the side opposite to the division surface 124 side, when releasing the tire 2 from the mold 104, is reduced. The tire 2 can suppress occurrence of tread chipping when released from the mold 104. From this viewpoint, the ratio RLu/RLs of the radius RLu of the arc representing the contour of the inner second inflection portion-corresponding portion 80u to the radius RLs of the arc representing the contour of the outer second inflection portion-corresponding portion 80s is preferably not less than 2.0 and not greater than 17.0 and more preferably not less than 4.0 and not greater than 14.0.

As is obvious from the above description, the heavy duty tire 2 which can suppress occurrence of tread chipping when released from the mold 104 and a decrease in wet performance due to wear and can reduce rolling resistance, is obtained.

The above-described technology capable of suppressing occurrence of tread chipping when released from a mold and a decrease in wet performance due to wear and reducing rolling resistance, can be applied to various tires.

## Claims

1. A heavy duty tire (2) comprising a tread (4) configured to come into contact with a road surface at a tread surface (6) thereof, wherein
the tread (4) has a tread pattern including a plurality of circumferential grooves (10) and a plurality of lateral sipes (74),
the plurality of circumferential grooves (10) demarcate a plurality of land portions (20) in the tread (4),
the plurality of land portions (20) include a pair of outer land portions (28) each located on an outermost side in an axial direction and including an end (TE) of the tread surface (6), and a plurality of inner land portions (30) located between the pair of outer land portions (28) and aligned in the axial direction,
the plurality of circumferential grooves (10) include a circumferential main groove (16) located between each of the outer land portions (28) and the inner land portion (30) located axially inward of the outer land portion (28), and a circumferential narrow groove (18) located between two adjacent said inner land portions (30),
the circumferential narrow groove (18) includes a body portion (54) including a groove opening (18M) of the circumferential narrow groove (18), a wide portion (56) including a groove bottom (18T) of the circumferential narrow groove (18), and a first inflection portion (58) connecting the body portion (54) and the wide portion (56),
the body portion (54) includes a narrow groove portion (62), and the narrow groove portion (62) includes a straight portion (70) extending in a straight manner in the depth direction and having a groove width (WC1) being uniform in the depth direction,
a maximum width WC2 of the wide portion (56) is wider than a minimum width WC1 of the narrow groove portion (62),
a pair of wall surfaces (18S) of the circumferential narrow groove (18) come into contact with each other at the narrow groove portion (62) when the tread (4) comes into contact with a road surface and becomes deformed,
a contour of the first inflection portion (58) in a cross-section of the circumferential narrow groove (18) is represented by an arc having a radius RC1, and the groove width of the first inflection portion (58) gradually increases from the narrow groove portion (62) toward the wide portion (56),
at least one of the inner land portions (30) has the lateral sipes (74),
the lateral sipes (74) are connected to the circumferential narrow groove (18),
each of the lateral sipes (74) includes a sipe body (76) including a groove opening (74M) of the lateral sipe (74), a tubular portion (78) including a groove bottom of the lateral sipe (74), and a second inflection portion (80) connecting the sipe body (76) and the tubular portion (78),
a maximum width WL2 of the tubular portion (78) is wider than a minimum width WL1 of the sipe body (76),
the radius RC1 of the arc representing the contour of the first inflection portion (58) is larger than half the maximum width WC2 of the wide portion (56),
**characterized in that**
a contour of the second inflection portion (80) in a cross-section of the lateral sipe (74) is curved so as to be recessed inward from the outer side thereof and is represented by an arc having a radius RL1, and
wherein the radius RL1 of the arc representing the contour of the second inflection portion (80) is larger than half the maximum width WL2 of the tubular portion (78),
wherein a groove depth D2 of the body portion (54) of the circumferential narrow groove (18), a groove depth D3 from the groove opening (18M) of the circumferential narrow groove (18) to a position (PX) at which the wide portion (56) has the maximum width WC2, and a groove depth D5 of the lateral sipe (74) satisfy the following formula, formula: $D 2 < D 5 < D 3 .$

2. The heavy duty tire (2) according to claim 1, wherein a ratio WC1/WC2 of the minimum width WC1 of the narrow groove portion (62) to the maximum width WC2 of the wide portion (56) is not less than 0.10 and not greater than 0.35.

3. The heavy duty tire (2) according to any one of claims 1 to 2, wherein the minimum width WC1 of the narrow groove portion (62) is not greater than 2.5 mm.

4. The heavy duty tire (2) according to any one of claims 1 to 3, wherein a ratio D2/D1 of a groove depth D2 of the body portion (54) of the circumferential narrow groove (18) to a groove depth D1 of the circumferential narrow groove (18) is not less than 0.25 and not greater than 0.70.

## Patentansprüche

1. Reifen für schwere Last (2), der eine Lauffläche (4) umfasst, die ausgestaltet ist, um mit einer Straßenoberfläche an einer Laufflächenoberfläche (6) davon in Kontakt zu kommen, wobei
die Lauffläche (4) ein Laufflächenprofil aufweist, das eine Vielzahl von Umfangsrillen (10) und eine Vielzahl von Querfeinschnitten (74) umfasst,
die Vielzahl von Umfangsrillen (10) eine Vielzahl von Landabschnitten (20) in der Lauffläche (4) abgrenzen,
die Vielzahl von Landabschnitten (20) ein Paar äußere Landabschnitte (28), die sich jeweils auf einer äußersten Seite in einer axialen Richtung befinden und ein Ende (TE) der Laufflächenoberfläche (6) umfassen, und eine Vielzahl von inneren Landabschnitten (30), die sich zwischen dem Paar äußeren Landabschnitten (28) befinden und in der axialen Richtung ausgerichtet sind, umfassen,
die Vielzahl von Umfangsrillen (10) eine Umfangshauptrille (16), die sich zwischen jedem der äußeren Landabschnitte (28) und dem inneren Landabschnitt (30) befindet, der sich axial innen von dem äußeren Landabschnitt (28) befindet, und eine schmale Umfangsrille (18), die sich zwischen zwei benachbarten der inneren Landabschnitte (30) befindet, umfassen,
die schmale Umfangsrille (18) einen Körperabschnitt (54), der eine Rillenöffnung (18M) der schmalen Umfangsrille (18) umfasst, einen breiten Abschnitt (56), der einen Rillenboden (18T) der schmalen Umfangsrille (18) umfasst, und einen ersten Biegungsabschnitt (58), der den Körperabschnitt (54) und den breiten Abschnitt (56) verbindet, umfasst,
der Körperabschnitt (54) einen schmalen Rillenabschnitt (62) umfasst und der schmale Rillenabschnitt (62) einen geraden Abschnitt (70) umfasst, der sich in einer geraden Weise in der Tiefenrichtung erstreckt und eine Rillenbreite (WC1) aufweist, die in der Tiefenrichtung einheitlich ist,
eine maximale Breite WC2 des breiten Abschnitts (56) breiter als eine minimale Breite WC1 des schmalen Rillenabschnitts (62) ist,
ein Paar Wandoberflächen (18S) der schmalen Umfangsrille (18) an dem schmalen Rillenabschnitt (62) miteinander in Kontakt kommt, wenn die Lauffläche (4) mit einer Straßenoberfläche in Kontakt kommt und verformt wird,
eine Kontur des ersten Biegungsabschnitts (58) in einem Querschnitt der schmalen Umfangsrille (18) durch einen Bogen dargestellt ist, der einen Radius RC1 aufweist, und die Rillenbreite des ersten Biegungsabschnitts (58) von dem schmalen Rillenabschnitt (62) zu dem breiten Abschnitt (56) allmählich zunimmt,
mindestens einer der inneren Landabschnitte (30) die Querfeinschnitte (74) aufweist,
die Querfeinschnitte (74) mit der schmalen Umfangsrille (18) verbunden sind,
jeder der Querfeinschnitte (74) einen Feinschnittkörper (76), der eine Rillenöffnung (74M) des Querfeinschnitts (74) umfasst, einen rohrförmigen Abschnitt (78), der einen Rillenboden des Querfeinschnitts (74) umfasst, und einen zweiten Biegungsabschnitt (80), der den Feinschnittkörper (76) und den rohrförmigen Abschnitt (78) verbindet, umfasst,
eine maximale Breite WL2 des rohrförmigen Abschnitts (78) breiter als eine minimale Breite WL1 des Feinschnittkörpers (76) ist,
der Radius RC1 des Bogens, der die Kontur des ersten Biegungsabschnitts (58) darstellt, größer als die Hälfte der maximalen Breite WC2 des breiten Abschnitts (56) ist,
**dadurch gekennzeichnet, dass**
eine Kontur des zweiten Biegungsabschnitts (80) in einem Querschnitt des Querfeinschnitts (74) so gekrümmt ist, dass er von der Außenseite davon nach innen vertieft ist, und durch einen Bogen dargestellt ist, der einen Radius RL1 aufweist, und
wobei der Radius RL1 des Bogens, der die Kontur des zweiten Biegungsabschnitts (80) darstellt, größer als die Hälfte der maximalen Breite WL2 des rohrförmigen Abschnitts (78) ist,
wobei eine Rillentiefe D2 des Körperabschnitts (54) der schmalen Umfangsrille (18), eine Rillentiefe D3 von der Rillenöffnung (18M) der schmalen Umfangsrille (18) zu einer Position (PX), an der der breite Abschnitt (56) die maximale Breite WC2 aufweist, und eine Rillentiefe D5 des Querfeinschnitts (74) die folgende Formel erfüllen, Formel: $D 2 < D 5 < D 3 .$

2. Reifen für schwere Last (2) nach Anspruch 1, wobei ein Verhältnis WC1/WC2 der minimalen Breite WC1 des schmalen Rillenabschnitts (62) zu der maximalen Breite WC2 des breiten Abschnitts (56) nicht kleiner als 0,10 und nicht größer als 0,35 ist.

3. Reifen für schwere Last (2) nach einem der Ansprüche 1 bis 2, wobei die minimale Breite WC1 des schmalen Rillenabschnitts (62) nicht größer als 2,5 mm ist.

4. Reifen für schwere Last (2) nach einem der Ansprüche 1 bis 3, wobei ein Verhältnis D2/D1 einer Rillentiefe D2 des Körperabschnitts (54) der schmalen Umfangsrille (18) zu einer Rillentiefe D1 der schmalen Umfangsrille (18) nicht kleiner als 0,25 und nicht größer als 0,70 ist.

## Revendications

1. Pneumatique pour service intensif (2) comprenant une bande de roulement (4) configurée pour venir en contact avec une surface routière au niveau d'une surface de bande de roulement (6) de celle-ci, dans lequel
la bande de roulement (4) présente un motif de bande de roulement incluant une pluralité de rainures circonférentielles (10) et une pluralité de fentes latérales (74),
la pluralité de rainures circonférentielles (10) délimitent une pluralité de portions en relief (20) dans la bande de roulement (4),
la pluralité de portions en relief (20) incluent une paire de portions en relief extérieures (28) situées chacune sur un côté le plus à l'extérieur dans une direction axiale et incluant une extrémité (TE) de la surface de bande de roulement (6), et une pluralité de portions en relief intérieures (30) situées entre la paire de portions en relief extérieures (28) et alignées dans la direction axiale,
la pluralité de rainures circonférentielles (10) incluent une rainure principale circonférentielle (16) située entre chacune des portions en relief extérieures (28) et de la portion en relief intérieure (30) située axialement à l'intérieur de la portion en relief extérieure (28), et une rainure étroite circonférentielle (18) située entre deux portions adjacentes desdites portions en relief intérieures (30),
la rainure étroite circonférentielle (18) inclut une portion formant corps (54) incluant une ouverture de rainure (18M) de la rainure étroite circonférentielle (18), une portion large (56) incluant un fond de rainure (18T) de la rainure étroite circonférentielle (18), et une première portion d'inflexion (58) connectant la portion formant corps (54) et la portion large (56),
la portion formant corps (54) inclut une portion de rainure étroite (62), et la portion de rainure étroite (62) inclut une portion rectiligne (70) s'étendant de manière rectiligne dans la direction de la profondeur et ayant une largeur de rainure (WC1) qui est uniforme dans la direction de la profondeur,
une largeur maximum WC2 de la portion large (56) est plus large qu'une largeur minimum WC1 de la portion de rainure étroite (62),
une paire de surfaces de parois (18S) de la rainure étroite circonférentielle (18) viennent en contact l'une avec l'autre au niveau de la portion de rainure étroite (62) quand la bande de roulement (4) vient en contact avec une surface routière et devient déformée,
un contour de la première portion d'inflexion (58) dans une section transversale de la rainure étroite circonférentielle (18) est représentée par un arc ayant un rayon RC1, et la largeur de rainure de la première portion d'inflexion (58) augmente graduellement depuis la portion de rainure étroite (62) vers la portion large (56),
l'une au moins des portions en relief intérieures (3) comporte les fentes latérales (74),
les fentes latérales (74) sont connectées à la rainure étroite circonférentielle (18),
chacune des fentes latérales (74) inclut un corps de fente (76) incluant une ouverture de rainure (74M) de la fente latérale (74), une portion tubulaire (78) incluant un fond de rainure de la fente latérale (74) et une deuxième portion d'inflexion (80) connectant le corps de fente (76) et la portion tubulaire (78), une largeur maximum WL2 de la portion tubulaire (78) est plus large qu'une largeur minimum WL1 du corps de fente (76),
le rayon RC1 de l'arc représentant le contour de la première portion d'inflexion (58) est plus grand que la moitié de la largeur maximum WC2 de la portion large (56),
**caractérisé en ce que**
un contour de la deuxième portion d'inflexion (80) dans une section transversale de la fente latérale (74) est incurvé de manière à être évidé vers l'intérieur à partir du côté extérieur de celle-ci et est représenté par un arc ayant un rayon RL1, et
dans lequel le rayon RL1 de l'arc représentant le contour de la deuxième portion d'inflexion (80) est plus grand que la moitié de la largeur maximum WL2 de la portion tubulaire (78),
dans lequel une profondeur de rainure D2 de la portion formant corps (54) de la rainure étroite circonférentielle (18), une profondeur de rainure D3 depuis l'ouverture de rainure (18M) de la rainure étroite circonférentielle (18) jusqu'à une position (PX) à laquelle la portion large (56) a la largeur maximum WC2, et une profondeur de rainure D5 de la fente latérale (74) satisfont à la formule suivante $D 2 < D 5 < D 3 .$

2. Pneumatique pour service intensif (2) selon la revendication 1, dans lequel un rapport WC1/WC2 de la largeur minimum WC1 de la portion de rainure étroite (62) sur la largeur maximum WC2 de la portion large (56) n'est pas inférieur à 0,10 et n'est pas supérieur à 0,35.

3. Pneumatique pour service intensif (2) selon l'une quelconque des revendications 1 à 2, dans lequel la largeur minimum WC1 de la portion de rainure étroite (62) n'est pas supérieure à 2,5 mm.

4. Pneumatique pour service intensif (2) selon l'une quelconque des revendications 1 à 3, dans lequel un rapport D2/D1 d'une profondeur de rainure D2 de la portion formant corps (54) de la rainure étroite circonférentielle (18) sur une profondeur de rainure D1 de la rainure étroite circonférentielle (18) n'est pas inférieur à 0,25 et n'est pas supérieur à 0,70.
